(19) Europäisches Patentamt
European Patent Office
Office européen des brevets

(11) Veröffentlichungsnummer: **0 120 807**
**B1**

(12) **EUROPÄISCHE PATENTSCHRIFT**

(45) Veröffentlichungstag der Patentschrift: **18.01.89**

(51) Int. Cl.⁴: **C 09 B 62/09,** D 06 P 3/66

(21) Anmeldenummer: **84810085.5**

(22) Anmeldetag: **20.02.84**

(54) **Reaktivfarbstoffe, deren Herstellung und Verwendung.**

(30) Priorität: **24.02.83 CH 1032/83**

(43) Veröffentlichungstag der Anmeldung:
**03.10.84 Patentblatt 84/40**

(45) Bekanntmachung des Hinweises auf die Patenterteilung:
**18.01.89 Patentblatt 89/3**

(84) Benannte Vertragsstaaten:
**CH DE FR GB IT LI**

(56) Entgegenhaltungen:
**EP-A- 0 065 732**
**GB-A- 2 023 161**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Scheibli, Peter, Dr., Nussbaumweg 3, CH-4103 Bottmingen (CH)**

**EP 0 120 807 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, im allgemeinen, und insbesondere in bezug auf die Applikation, aufweisen.

Der vorliegenden Erfindung lag die Aufgabe zugrunde, neue, verbesserte Reaktivfarbstoffe zu finden, die Baumwolle in den Farbtönen Blau und Marineblau färben. Die neuen Farbstoffe sollten sich vor allem durch hohe Fixierausbeuten und hohe Faser-Farbstoff-Bindungsstabilitäten auszeichnen, sie sollten besonders für das Färben nach dem Ausziehverfahren und dem Kaltverweilverfahren und auch für den Druck geeignet sein, und ausserdem sollten die nicht auf der Faser fixierten Anteile leicht auswaschbar sein.

Ferner wurden für die mit den neuen Farbstoffen erhältlichen Färbungen und Drucke gute Allgemeinechtheiten, beispielsweise Licht- und Nassechtheiten, gefordert.

Es hat sich gezeigt, dass die weiter unten definierten neuen bireaktiven Farbstoffe, die zwei endständige Aminofluor-1,3,5-triazinylreste enthalten, den gestellten Anforderungen entsprechen.

Gegenstand der Erfindung sind Reaktivfarbstoffe der Formel

$$X_1\text{–NH–A–N=N–M–N=N–B–NH–}X_2 \quad (1),$$

worin M zweifach gekuppelte 1-Amino-8-hydroxynaphthalin-3,6-disulfonsäure, 1-Amino-8-hydroxynaphthalin-4,6-disulfonsäure, 1-Amino-8-hydroxynaphthalin-4-sulfonsäure oder 2-Amino-5-hydroxynaphthalin-7-sulfonsäure, A und B unabhängig voneinander unsubstituiertes oder substituiertes Phenylen oder Naphthylen, und $X_1$ und $X_2$ unabhängig voneinander unsubstituiertes oder substituiertes Aminofluor-1,3,5-triazinyl ist, wobei eine substituierte Aminogruppe am Triazinring keinen weiteren Reaktivrest enthält; ausgenommen Reaktivfarbstoffe der Formel (1), worin A und B in para-Stellung verknüpfte Monosulfophenylen-Reste sind, in denen die Sulfogruppe in ortho-Stellung zur Azobrücke steht.

Die Reste A und B in Formel (1) können weitersubstituiert sein, beispielsweise durch Alkylgruppen mit 1 bis 4 Kohlenstoffatomen, wie Methyl, Äthyl, Propyl, Isopropyl oder Butyl, Alkoxygruppen mit 1 bis 4 Kohlenstoffatomen, wie Methoxy, Äthoxy, Propoxy, Isopropoxy oder Butoxy, Alkanoylaminogruppen mit 1 bis 4 Kohlenstoffatomen, wie Acetylamino oder Propionylamino, Alkoxycarbonyl mit 1 bis 4 Kohlenstoffatomen im Alkoxyrest, wie Methoxycarbonyl oder Äthoxycarbonyl, Alkylsulfonyl mit 1 bis 4 Kohlenstoffatomen, wie Methylsulfonyl oder Äthylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Äthylcarbamoyl, Sulfamoyl, N-Alkylsulfamoyl mit 1 bis 4 Kohlenstoffatomen, wie N-Methylsulfamoyl, N-Äthylsulfamoyl, N-Propylsulfamoyl, N-Isopropylsulfamoyl oder N-Butylsulfamoyl, Ureido, Hydroxy, Carboxy, Sulfomethyl oder Sulfo. Bevorzugt sind die Substituenten Methyl, Äthyl, Methoxy, Äthoxy, Acetylamino, Chlor, Brom, Ureido, Hydroxy, Carboxy, Sulfomethyl und insbesondere Sulfo.

Als unsubstituierte oder substituierte Aminogruppen in den Fluor-1,3,5-triazinylresten $X_1$ und $X_2$ kommen in Betracht: $-NH_2$, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-hetero-cyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Reste sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido, Hydroxy, Carboxy, Sulfomethyl oder Sulfo. Als Beispiele für derartige Aminogruppen seien genannt:

$-NH_2$, Methylamino, Äthylamino, Propylamino, Isopropylamino, Butylamino, Hexylamino, β-Methoxyäthylamino, γ-Methoxypropylamino, β-Äthoxyäthylamino, N,N-Dimethylamino, N,N-Diäthylamino, N-Methyl-N-phenylamino, N-Äthyl-N-phenylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino,
Benzylamino, Phenäthylamino, Cyclohexylamino, Phenylamino, Toluidino, Xylidino, Chloranilino, Anisidino, Phenetidino, N-Methyl-N-phenylamino,

N-Äthyl-N-phenylamino,
N-β-Hydroxyäthyl-N-phenylamino,
2-, 3-, oder 4-Sulfoanilino, 2,5-Disulfoanilino,
4-Sulfomethyl-anilino, N-Sulfomethylanilino,
2-, 3- oder 4-Carboxyphenylamino,
2-Carboxy-5-sulfophenylamino,
2-Carboxy-4-sulfophenylamino,
4-Sulfonaphthyl-(1)-amino,
3,6-Disulfonaphthyl-(1)-amino,
3,6,8-Trisulfonaphthyl-(1)-amino,
4,6,8-Trisulfonaphthyl-(1)-amino,
1-Sulfonaphthyl-(2)-amino,
1,5-Disulfonaphthyl-(2)-amino,
6-Sulfonaphthyl-(2)-amino, Morpholino,
Piperidino und Piperazino.

Bevorzugt sind:

Reaktivfarbstoffe der Formel

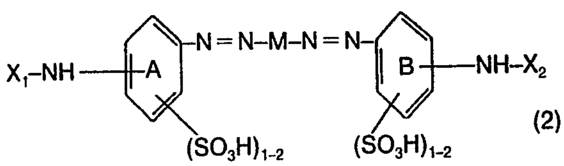 (2)

worin M, $X_1$ und $X_2$ die unter Formel (1) angegebenen Bedeutungen haben, und die Benzolringe A und B unabhängig voneinander gegebenenfalls weitersubstituiert sind; Reaktivfarbstoffe der Formel (2), worin $X_1$ und $X_2$ unabhängig voneinander je ein Rest der Formel

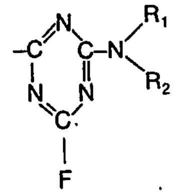 (3)

ist, worin $R_1$ und $R_2$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenäthyl, Cyclohexyl, Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist, oder worin $R_1$ und $R_2$ zusammen mit dem Aminostickstoffatom einen Morpholino-, Piperidino- oder Piperazinorest bilden;

Reaktivfarbstoffe der Formel (2), worin die Benzolringe A und B nicht weitersubstituiert sind;

Reaktivfarbstoffe der Formel

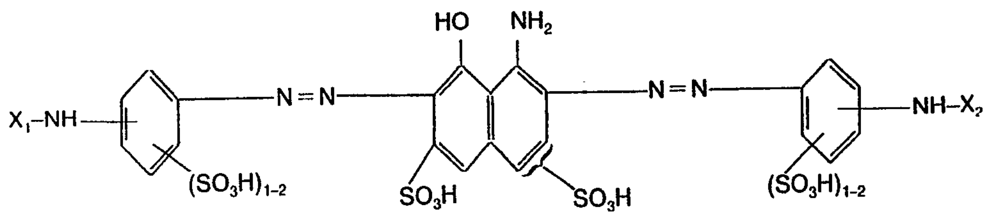 (4),

worin $X_1$ und $X_2$ die für Formel (2) geltenden Bedeutungen haben;

Reaktivfarbstoffe der Formel

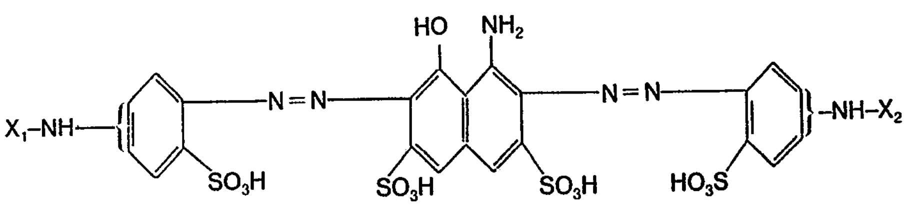 (5),

worin $X_1$ und $X_2$ die für Formel (2) geltenden Bedeutungen haben, wobei die Reaktivfarbstoffe der DE-OS 27 38 823 ausgenommen sind.

Reaktivfarbstoffe der Formel

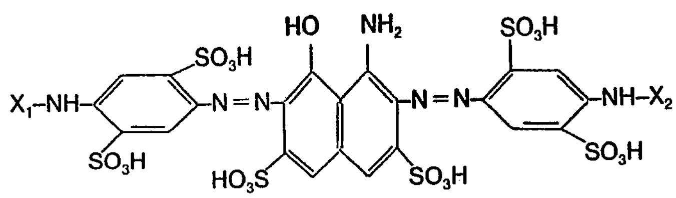 (6),

worin $X_1$ und $X_2$ die für Formel (2) geltenden Bedeutungen haben;

Reaktivfarbstoffe der Formel

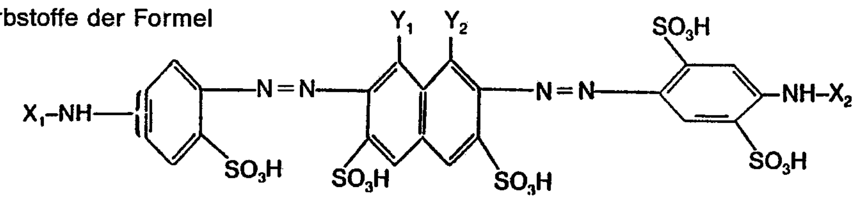

(7),

worin ein Y OH, und das andere Y $NH_2$ ist, und $X_1$ und $X_2$ die für Formel (2) geltenden Bedeutungen haben;

Reaktivfarbstoffe der Formel (5), (6) oder (7), worin $X_1$ und $X_2$ unabhängig voneinander je ein Rest der Formel (3) ist, worin die Aminogruppe $-NR_1R_2$: $-NH_2$, N-β-Hydroxyäthylamino, N,N-Di-β-Hydroxyäthylamino, β-Sulfoäthylamino, Phenylamino, das gegebenenfalls im Phenylkern substituiert ist durch Chlor, Methyl, Äthyl, Methoxy, Äthoxy, Acetylamino, Hydroxy, Carboxy, Sulfomethyl oder Sulfo, N-$C_{1-4}$-Alkyl-N-phenylamino, das gegebenenfalls im Phenylkern substituiert ist durch Chlor, Methyl oder Äthyl, N-Sulfo-$C_{1-4}$-alkyl-N-phenylamino, das gegebenenfalls im Phenylkern substituiert ist durch Chlor, Methyl oder Äthyl, N-Hydroxy-$C_{1-4}$-alkyl-N-phenylamino, oder Sulfonaphthylamino ist.

Das Verfahren zur Herstellung der Reaktivfarbstoffe der Formel (1) ist dadurch gekennzeichnet, dass man Diazokomponenten der Formeln

$$H_2N\text{–}A\text{–}Z_1 \quad (8)$$

und

$$H_2N\text{–}B\text{–}Z_2 \quad (9),$$

worin $Z_1$ und $Z_2$ unabhängig voneinander $NH_2$, Acetylamino oder Nitro ist, die Kupplungskomponente
1-Amino-8-hydroxynaphthalin-3,6-disulfonsäure,
1-Amino-8-hydroxynaphthalin-4,6-disulfonsäure,
1-Amino-8-hydroxynaphthalin-4-sulfonsäure oder
2-Amino-5-hydroxynaphthalin-7-sulfonsäure,
2 Äquivalente 2,4,6-Trifluor-1,3,5-triazin und 2 Äquivalente von gleichen oder verschiedenen Aminen durch Diazotierung, Kupplung und Kondensation in geeigneter Reihenfolge zu Reaktivfarbstoffen der Formel (1) umsetzt, wobei, falls $Z_1$ oder $Z_2$ Acetylamino oder Nitro ist, dieses vor der Kondensation mit dem Fluortriazin durch Verseifen der Acetylaminogruppe bzw. Reduzieren der Nitrogruppe in die $NH_2$ Gruppe übergeführt wird.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten gewissen Einschränkungen unterliegt. Einerseits muss die Kupplung auf die Mittelkomponente M in saurer Lösung, in ortho-Stellung zur $NH_2$ Gruppe, zuerst ausgeführt werden, da bei vorangehender Kupplung in neutraler oder alkalischer Lösung, in ortho-Stellung zur OH Gruppe, eine nachfolgende Kupplung in ortho-Amino-Stellung nicht mehr möglich ist. Da ausserdem unter bestimmten Voraussetzungen Hydrolyse eines Fluortriazinrestes eintritt, muss ein Zwischenprodukt, welches Acetylaminogruppen (siehe weiter unten) enthält, zwecks Abspaltung der Acetylgruppen verseift werden, bevor mit einem Aminodifluortriazin oder Trifluortriazin kondensiert wird.

Wichtige Verfahrensvarianten sind dadurch gekennzeichnet,

1. dass man ein Amin $HNR_1R_2$, 2,4,6-Trifluor-1,3,5-triazin und eine Diaminobenzolsulfonsäure kondensiert, das erhaltene sekundäre Kondensationsprodukt diazotiert und sauer auf 1-Amino-8-hydroxynaphthalin-3,6-disulfonsäure kuppelt; dass man ein weiteres Amin mit 2,4,6-Trifluor-1,3,5-triazin und einer Diaminobenzolsulfonsäure kondensiert, das sekundäre Kondensationsprodukt diazotiert und die so erhaltene zweite Diazoniumverbindung in neutraler bis alkalischer Lösung auf die anfangs hergestellte Monoazoverbindung kuppelt.

2. dass man 2 Mol einer Amino-acetylaminobenzolsulfonsäure oder zwei verschiedene Amino-acetylamino-benzolsulfonsäuren, sauer und alkalisch, auf 1-Amino-8-hydroxynaphthalin-3,6-disulfonsäure kuppelt, den erhaltenen Disazofarbstoff verseift, den entstandenen Diaminodisazofarbstoff mit 2 Äquivalenten 2,4,6-Trifluor-1,3,5-triazin kondensiert, und zuletzt mit 2 Äquivalenten eines Amins $HNR_1R_2$ umsetzt, oder dass man mit 2 Äquivalenten eines Aminodifluortriazins kondensiert. Statt einer Amino-acetylamino-benzolsulfonsäure kann man auch eine Amino-nitrobenzolsulfonsäure bzw. zwei verschiedene Amino-nitro-benzolsulfonsäuren als Diazokomponenten verwenden, in dem erhaltenen Dinitrodisazofarbstoff die Nitrogruppen durch Reduktion, z.B. mit Eisen nach BECHAMPS, in Aminogruppen umwandeln, und den entstandenen Diaminodisazofarbstoff, wie oben beschrieben, weiterverarbeiten.

3. dass man eine Amino-acetylamino-benzolsulfonsäure diazotiert und sauer auf 1-Amino-8-hydroxynaphthalin-3,6-disulfonsäure kuppelt, und aus der erhaltenen o-Aminoazoverbindung die Acetylgruppe durch Verseifen abspaltet; dass man ferner ein Amin $HNR_1R_2$, 2,4,6-Trifluor-1,3,5-triazin und eine Diaminobenzolsulfonsäure miteinander kondensiert, das sekundäre Kondensationsprodukt diazotiert und auf die zu Anfang hergestellte Monoazoverbindung kuppelt, dann die freie, acylierbare Aminogruppe im Rest der ersten Diazokomponente mit Trifluortriazin kondensiert, und zum Schluss mit 1 Äquivalent eines Amins $HNR_1R_2$ kondensiert, oder dass man mit 1 Äquivalent eines Amino-difluortriazins kondensiert. Die beiden Amine $HNR_1R_2$, die nacheinander eingesetzt werden, können gleich oder verschieden sein. Auch bei dieser Verfahrensvariante kann man anstelle der Amino-acetylamino-benzolsulfonsäure eine Amino-nitro-benzolsulfonsäure als Diazokomponente verwenden, die Nitro-o-aminoazoverbindung reduzieren, und anschliessend wie oben weiterkuppeln.

Welche Reaktion bei der Herstellung eines sekundären Kondensationsproduktes aus Amin $HNR_1R_2$, 2,4,6-Trifluor-1,3,5-triazin und Diaminobenzolsulfonsäure zweckmässigerweise zuerst ausgeführt wird, die des Trifluortriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen.

In der oben gegebenen Erläuterung der wichtigsten Verfahrensvarianten wurde stets als zweifach kuppelbare Kupplungskomponente die 1-Amino-8-hydroxynaphthalin-3,6-disulfonsäure und als acylierbare Diazokomponente eine Diaminobenzolsulfonsäure bzw. Amino-acetylamino-benzolsulfonsäure genannt. Statt derer können selbstverständlich, entsprechend der Definition für die Reste M, A und B in Formel (1), andere Komponenten eingesetzt werden, z.B. als Kupplungskomponente die 1-Amino-8-hydroxynaphthalin-4,6-disulfonsäure, und als Diazokomponenten anders substituierte Diaminobenzole, wie 1,4-Diaminobenzol oder 1,3-Diamino-4-chlorbenzol, oder Diaminonaphthaline, wie 2,6-Diaminonaphthalin.

Im folgenden sollen mögliche Ausgangsstoffe, die zur Herstellung der Reaktivfarbstoffe der Formel (1) verwendet werden können, einzeln genannt werden.

Diazokomponenten der Formeln (8) und (9)
1,3-Diaminobenzol, 1,4-Diaminobenzol,
1,3-Diamino-4-chlorbenzol,
1,3-Diamino-4-methylbenzol,
1,3-Diamino-4-äthylbenzol,
1,3-Diamino-4-methoxybenzol,
1,3-Diamino-4-äthoxybenzol,
1,4-Diamino-2-methylbenzol,
1,4-Diamino-2-methoxybenzol,
1,4-Diamino-2-äthoxybenzol,
1,4-Diamino-2-chlorbenzol,
1,4-Diamino-2,5-dimethylbenzol,
1,4-Diamino-2,5-diäthylbenzol,
1,4-Diamino-2-methyl-5-methoxybenzol,
1,4-Diamino-2,5-dimethoxybenzol,
1,4-Diamino-2,5-diäthoxybenzol,
2,6-Diamino-naphthalin,
1,3-Diamino-2,4,6-trimethylbenzol,
1,4-Diamino-2,3,5,6-tetramethylbenzol,
1,3-Diamino-4-nitrobenzol,
4,4′-Diaminostilben,
4,4′-Diaminodiphenylmethan,
4,4′-Diaminobiphenyl (Benzidin),
3,3′-Dimethylbenzidin, 3,3′-Dimethoxybenzidin,
3,3′-Dichlorbenzidin, 3,3′-Dicarboxybenzidin,
3,3′-Dicarboxymethoxy-benzidin,
2,2′-Dimethylbenzidin,
4,2′-Diaminodiphenyl (Diphenylin),
2,6-Diaminonaphthalin-4,8-disulfonsäure,
1,4-Diaminobenzol-2-sulfonsäure,
1,4-Diaminobenzol-2,5-disulfonsäure,
1,4-Diaminobenzol-2,6-disulfonsäure,
1,3-Diaminobenzol-4-sulfonsäure,
1,3-Diaminobenzol-4,6-disulfonsäure,
1,4-Diamino-2-chlorbenzol-5-sulfonsäure,
1,4-Diamino-2-methylbenzol-5-sulfonsäure,
1,5-Diamino-6-methylbenzol-3-sulfonsäure,
1,3-Diamino-6-methylbenzol-4-sulfonsäure,
3-(3′-bzw. 4′-Aminobenzoylamino)-1-aminobenzol-6-sulfonsäure,
1-(4′-Aminobenzoylamino)-4-aminobenzol-2,5-disulfonsäure,
1,4-Diaminobenzol-2-carbonsäure,
1,3-Diaminobenzol-4-carbonsäure,
1,2-Diaminobenzol-4-carbonsäure,
1,3-Diaminobenzol-5-carbonsäure,
1,4-Diamino-2-methylbenzol,
4,4′-Diaminodiphenyloxid,
4,4′-Diaminodiphenylharnstoff-2,2′-disulfonsäure,
4,4′-Diaminodiphenyloxyäthan-2,2′-disulfonsäure,
4,4′-Diaminostilben-2,2′-disulfonsäure,
4,4′-Diaminodiphenyläthan-2,2′-disulfonsäure.

Falls als Diazokomponente statt eines Diamins eine Amino-acetylamino-Verbindung eingesetzt werden soll, aus welcher nachträglich die Acetylgruppe durch Verseifen wieder abgespalten wird, wie dies oben in den Erläuterungen der Verfahrensvarianten beschrieben und in den Formeln (8) und (9) vorgesehen ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten
1-Amino-8-hydroxynaphthalin-3,6-disulfonsäure,
1-Amino-8-hydroxynaphthalin-4,6-disulfonsäure,
1-Amino-8-hydroxynaphthalin-4-sulfonsäure,
2-Amino-5-hydroxynaphthalin-7-sulfonsäure.

Reaktivkomponenten
2,4,6-Trifluor-1,3,5-triazin (Cyanurfluorid) bzw. die primären Kondensationsprodukte von 2,4,6-Trifluor-1,3,5-triazin mit den unten genannten Aminen.

Amine
Ammoniak, Methylamin, Dimethylamin, Äthylamin,
Diäthylamin, Propylamin, Isopropylamin,
Butylamin, Dibutylamin, Isobutylamin,
sek.-Butylamin, tert.-Butylamin, Hexylamin,
Methoxyäthylamin, Äthoxyäthylamin,
Methoxypropylamin, Chloräthylamin,
Hydroxyäthylamin, Dihydroxyäthylamin,
Hydroxypropylamin, Aminoäthansulfonsäure,
β-Sulfatoäthylamin, Benzylamin, Phenäthylamin,
Cyclohexylamin, Anilin, o-, m- und p-Toluidin,
2,3-, 2,4-, 2,5-, 2,6-, 3,4- und 3,5-Dimethylanilin,

o-, m- und p-Chloranilin, N-Methylanilin, N-Äthylanilin, 3- und 4-Acetylaminoanilin, 2,5-Dimethoxyanilin, o-, m- und p-Anisidin, o-, m- und p-Phenetidin, 2-Methoxy-5-methylanilin, 2-Äthoxy-5-methoxyanilin, 4-Bromanilin, 3-Aminobenzamid, 4-Aminophenylsulfamid, 3-Trifluormethylanilin, 3- und 4-Aminophenylharnstoff, 1-Naphthylamin, 2-Naphthylamin, Orthanilsäure, Metanilinsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methansulfonsäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8-, und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8-, und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin und Piperazin.

Die Diazotierung der Diazokomponenten der Formeln (8) und (9) bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die erste Kupplung auf die Kupplungskomponente M erfolgt bei sauren bis stark sauren pH-Werten, die zweite Kupplung bei schwach sauren, neutralen bis schwach alkalischen pH-Werten.

Die Kondensationen des 2,4,6-Trifluor-1,3,5-triazins mit den Diazokomponenten der Formeln (8) und (9) und mit den Aminen bzw. mit acylierbaren Monoazo- oder Disazo-Zwischenprodukten erfolgen vorzugsweise in wässeriger Lösung oder Suspension, bei niedriger Temperatur und bei schwach saurem, neutralem bis schwach alkalischem pH-Wert. Vorteilhaft wird der bei der Kondensation freiwerdende Fluorwasserstoff laufend durch Zugabe wässeriger Alkalihydroxyde, -carbonate oder -bicarbonate neutralisiert.

Die Disazofarbstoffe der Formel (1) sind faser(bi)reaktiv, da sie an jedem der beiden s-Triazinringe ein abspaltbares Fluoratom gebunden enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden.

Die Reaktivfarbstoffe der Formel (1) eignen sich besonders zum Färben von Baumwolle nach den Ausziehfärbeverfahren, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-,

Wasser-, Seewasser-, Überfärbe- und Schweissechtheiten, sowie eine gute Plissierechtheit, Bügelechtheit und Reibechtheit.

Aus der DE-A-27 38 823 sind Disazofarbstoffe mit Fluortriazinresten bekannt. Gegenüber diesen zeichnen sich die erfindungsgemässen Farbstoffe durch eine verbesserte Echtheit aus. In der EP-A-65 732 sind Fluortriazinfarbstoffe beschrieben, die eine ähnliche Struktur haben, aber zusätzlich Vinylsulfonyl-o. ä.-gruppen enthalten; diese weisen nicht alle guten Applikationseigenschaften der erfindungsgemässen Farbstoffe auf. Ferner sind aus der GP-PS 2 023 161 Disazofarbstoffe mit Halogentriazinresten bekannt; diese unterscheiden sich in der Konstitution des Disazochromophors in charakteristischer Weise von den erfindungsgemässen Farbstoffen.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1:

Zu 78.7 Teilen der in 600 Teilen Wasser gelösten Kupplungskomponente der Formel

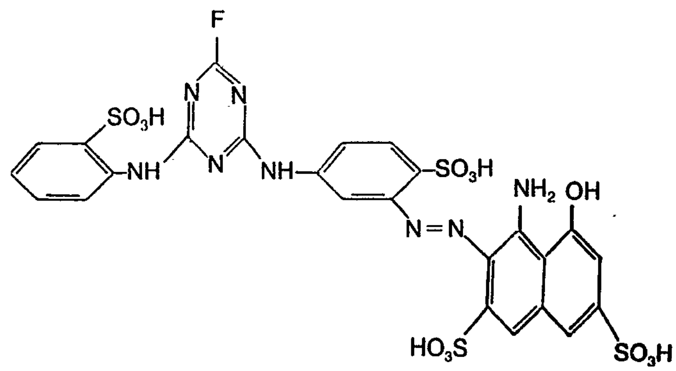

(hergestellt durch saure Kupplung von diazotiertem
2-(3′-Amino-4′-sulfophenylamino)-4-fluor-6-(2″-sulfophenylamino)-1,3,5-triazin auf
1-Amino-8-hydroxy-naphthalin-3,6-disulfonsäure)
wird bei 0 bis 5 °C eine Mischung von 45,6 Teilen diazotiertem
2-(3′-Amino-4′-sulfophenylamino)-4-fluor-6-(2″-sulfophenylamino)-1,3,5-triazin
und 300 Teilen Wasser gegeben. Nach vollständiger Kupplungsreaktion bei pH 6,5 bis 7,5 wird der gebildete Reaktivfarbstoff der Formel

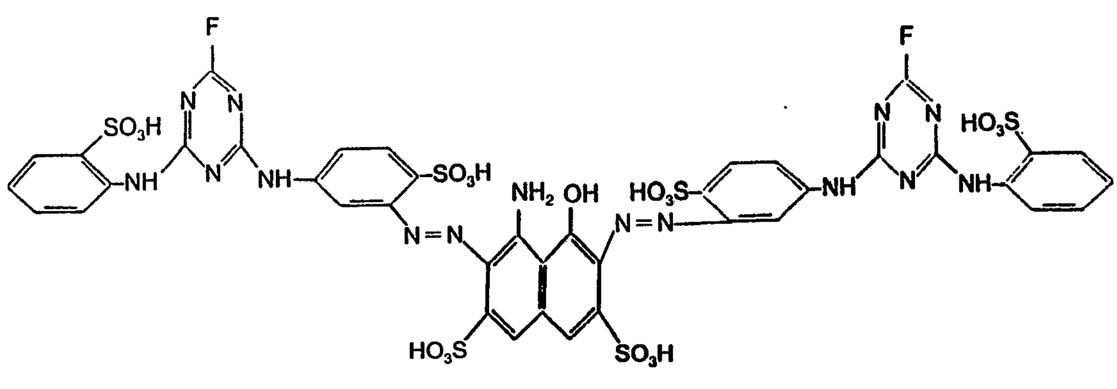

durch Eindampfen oder Gefriertrocknen der Reaktionslösung bei pH 7 isoliert. Er färbt Baumwolle in blauen Tönen.

Weitere wertvolle Reaktivfarbstoffe, die Baumwolle in den in Tabelle 1, Spalte 4, angegebenen Farbtönen färben, werden erhalten, wenn man gemäss den Angaben in Beispiel 1 die in Spalte 2 angegebene diazotierte Diazokomponente sauer auf 1-Amino-8-hydroxy-naphthalin-3,6-disulfonsäure kuppelt, und auf die so erhaltene Monoazoverbindung die in Spalte 3 angegebene diazotierte Diazokomponente kuppelt.

Tabelle 1

| Nr. | Diazokomponente | Diazokomponente | Farbton auf Baumwolle |
|---|---|---|---|
| 1 | 2-(3′-Amino-4′-sulfophenylamino)-4-fluor-6-(2″-sulfophenylamino)-1,3,5-triazin | 2-(3′-Amino-4′-sulfophenylamino)-4-fluor-6-(″-sulfonapht-2″-yl-amino)-1,3,5-triazin | blau |
| 2 | 2-(3′-Amino-4′-sulfophenylamino)-4-fluor-6-(2″-sulfophenylamino)-1,3,5-triazin | 2-(3′-Amino-4′-sulfophenylamino)-4-fluor-6-(″-chlor-5″-sulfophenylamino)-1,3,5-triazin | blau |
| 3 | 2-(3′-Amino-4′-sulfophenylamino)-4-fluor-6-(2″-sulfophenylamino)-1,3,5-triazin | 2-(3′-Amino-4′-sulfophenylamino)-4-fluor-6-(β-hydroxyäthylamino)-1,3,5-triazin | blau |
| 4 | 2-(3′-Amino-4′-sulfophenylamino)-4-fluor-6-(2″-sulfophenylamino)-1,3,5-triazin | 2-(3′-Amino-4′-sulfophenylamino)-4-fluor-6-(β-sulfoäthylamino)-1,3,5-triazin | blau |
| 5 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(2″-sulfophenylamino)-1,3,5-triazin | grünstichig blau |
| 6 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 7 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(2″-chlor-5″-sulfophenylamino)-1,3,5-triazin | grünstichig blau |
| 8 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(β-hydroxyäthylamino)-1,3,5-triazin | grünstichig blau |
| 9 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(β-sulfoäthylamino)-1,3,5-triazin | grünstichig blau |
| 10 | 2-(3′-Amino-4′-sulfophenylamino)-4-fluor-6-(2″-sulfophenylamino)-1,3,5-triazin | 2-(4′-Amino-2′,5′-disulfophenylamino)-4-fluor-6-(2″-sulfophenylamino)-1,3,5-triazin | grünstichig blau |
| 11 | 2-(3′-Amino-4′-sulfophenylamino)-4-fluor-6-(2″-sulfophenylamino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 12 | 2-(3′-Amino-4′-sulfophenylamino)-4-fluor-6-(2″-sulfophenylamino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 13 | 2-(3′-Amino-4′-sulfophenylamino)-4-fluor-6-(2″-sulfophenylamino)-1,3,5-triazin | 2-(4′-Amino-2′,5′-disulfophenylamino)-4-fluor-6-(β-hydroxyäthylamino)-1,3,5-triazin | grünstichig blau |
| 14 | 2-(3′-Amino-4′-sulfophenylamino)-4-fluor-6-(2″-sulfophenylamino)-1,3,5-triazin | 2-(4′-Amino-2′,5′-disulfophenylamino)-4-fluor-6-(β-sulfoäthyl-amino)-1,3,5-triazin | grünstichig blau |
| 15 | 2-(3′-Amino-4′-sulfophenylamino)-4-fluor-6-(1″-sulfonaphth-2″-yl-amino)-1,3,5-triazin | 2-(3′-Amino-4′-sulfophenylamino)-4-fluor-6-(2″-sulfophenylamino)-1,3,5-triazin | blau |
| 16 | 2-(3′-Amino-4′-sulfophenylamino)-4-fluor-6-(1″-sulfonaphth-2″-yl-amino)-1,3,5-triazin | 2-(3′-Amino-4′-sulfophenylamino)-4-fluor-6-(1″-sulfonaphth-2″-yl-amino)-1,3,5-triazin | blau |
| 17 | 2-(3′-Amino-4′-sulfophenylamino)-4-fluor-6-(1″-sulfonaphth-2″-yl-amino)-1,3,5-triazin | 2-(3′-Amino-4′-sulfophenylamino)-4-fluor-6-(2″-chlor-5″-sulfophenylamino)-1,3,5-triazin | blau |
| 18 | 2-(3′-Amino-4′-sulfophenylamino)-4-fluor-6-(1″-sulfonaphth-2″-yl-amino)-1,3,5-triazin | 2-(3′-Amino-4′-sulfophenylamino)-4-fluor-6-(β-hydroxyäthylamino)-1,3,5-triazin | blau |
| 19 | 2-(3′-Amino-4′-sulfophenylamino)-4-fluor-6-(1″-sulfonaphth-2″-yl-amino)-1,3,5-triazin | 2-(3′-Amino-4′-sulfophenylamino)-4-fluor-6-(β-sulfoäthylamino)-1,3,5-triazin | blau |
| 20 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(2″-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 21 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(1″-sulfonaphth-2″-yl-amino)-1,3,5-triazin | grünstichig blau |
| 22 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(2″-chlor-5″-sulfophenylamino)-1,3,5-triazin | grünstichig blau |
| 23 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(β-hydroxyäthylamino)-1,3,5-triazin | grünstichig blau |
| 24 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(β-sulfoäthylamino)-1,3,5-triazin | grünstichig blau |
| 25 | 2-(3′-Amino-4′-sulfophenylamino)-4-fluor-6-(1″-sulfonaphth-2″-yl-amino)-1,3,5-triazin | 2-(4′-Amino-2′,5′-disulfophenylamino)-4-fluor-6-(2″-sulfophenylamino)-1,3,5-triazin | grünstichig blau |
| 26 | 2-(3′-Amino-4′-sulfophenylamino)-4-fluor-6-(1″-sulfonaphth-2″-yl-amino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 27 | 2-(3′-Amino-4′-sulfophenylamino)-4-fluor-6-(1″-sulfonaphth-2″-yl-amino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 28 | 2-(3′-Amino-4′-sulfophenylamino)-4-fluor-6-(1″-sulfonaphth-2″-yl-amino)-1,3,5-triazin | 2-(4′-Amino-2′,5′-disulfophenylamino)-4-fluor-6-(β-hydroxyäthylamino)-1,3,5-triazin | grünstichig blau |
| 29 | 2-(3′-Amino-4′-sulfophenylamino)-4-fluor-6-(1″-sulfonaphth-2″-yl-amino)-1,3,5-triazin | 2-(4′-Amino-2′,5′-disulfophenylamino)-4-fluor-6-(β-sulfoäthylamino)-1,3,5-triazin | grünstichig blau |
| 30 | 2-(3′-Amino-4′-sulfophenylamino)-4-fluor-6-(2″-chlor-5″-sulfophenyl-amino)-1,3,5-triazin | 2-(3′-Amino-4′-sulfophenylamino)-4-fluor-6-(2″-sulfophenylamino)-1,3,5-triazin | blau |
| 31 | 2-(3′-Amino-4′-sulfophenylamino)-4-fluor-6-(2″-chlor-5″-sulfophenyl-amino)-1,3,5-triazin | 2-(3′-Amino-4′-sulfophenylamino)-4-fluor-6-(1″-sulfonaphth-2″-yl-amino)-1,3,5-triazin | blau |
| 32 | 2-(3′-Amino-4′-sulfophenylamino)-4-fluor-6-(2″-chlor-5″-sulfophenyl-amino)-1,3,5-triazin | 2-(3′-Amino-4′-sulfophenylamino)-4-fluor-6-(2″-chlor-5″-sulfophenylamino)-1,3,5-triazin | blau |
| 33 | 2-(3′-Amino-4′-sulfophenylamino)-4-fluor-6-(2″-chlor-5″-sulfophenyl-amino)-1,3,5-triazin | 2-(3′-Amino-4′-sulfophenylamino)-4-fluor-6-(β-hydroxyäthylamino)-1,3,5-triazin | blau |
| 34 | 2-(3′-Amino-4′-sulfophenylamino)-4-fluor-6-(2″-chlor-5″-sulfophenyl-amino)-1,3,5-triazin | 2-(3′-Amino-4′-sulfophenylamino)-4-fluor-6-(β-sulfoäthylamino)-1,3,5-triazin | blau |
| 35 | 2-(3′-Amino-4′-sulfophenylamino)-4-fluor-6-(2″-chlor-5″-sulfophenyl-amino)-1,3,5-triazin | 2-(4′-Amino-3′-sulfophenylamino)-4-fluor-6-(2″-sulfophenylamino)-1,3,5-triazin | grünstichig blau |
| 36 | 2-(3′-Amino-4′-sulfophenylamino)-4-fluor-6-(2″-chlor-5″-sulfophenyl-amino)-1,3,5-triazin | 2-(4′-Amino-3′-sulfophenylamino)-4-fluor-6-(1″-sulfonaphth-2″-yl-amino)-1,3,5-triazin | grünstichig blau |
| 37 | 2-(3′-Amino-4′-sulfophenylamino)-4-fluor-6-(2″-chlor-5″-sulfophenyl-amino)-1,3,5-triazin | 2-(4′-Amino-3′-sulfophenylamino)-4-fluor-6-(2″chlor-5″-sulfophenylamino)-1,3,5-triazin | grünstichig blau |
| 38 | 2-(3′-Amino-4′-sulfophenylamino)-4-fluor-6-(2″-chlor-5″-sulfophenyl-amino)-1,3,5-triazin | 2-(4′-Amino-3′-sulfophenylamino)-4-fluor-6-(β-hydroxyäthylamino)-1,3,5-triazin | grünstichig blau |
| 39 | 2-(3′-Amino-4′-sulfophenylamino)-4-fluor-6-(2″-chlor-5″-sulfophenyl-amino)-1,3,5-triazin | 2-(4′-Amino-3′-sulfophenylamino)-4-fluor-6-(β-sulfoäthylamino)-1,3,5-triazin | grünstichig blau |
| 40 | 2-(3′-Amino-4′-sulfophenylamino)-4-fluor-6-(2″-chlor-5″-sulfophenyl-amino)-1,3,5-triazin | 2-(4′-Amino-2′,5′-disulfophenylamino)-4-fluor-6-(2″-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 41 | 2-(3′-Amino-4′-sulfophenylamino)-4-fluor-6-(2″-chlor-5″-sulfophenyl-amino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 42 | 2-(3′-Amino-4′-sulfophenylamino)-4-fluor-6-(2″-chlor-5″-sulfophenyl-amino)-1,3,5-triazin | 2-(4′-Amino-2′,5′-disulfophenylamino)-4-fluor-6-(2″-chlor-5″sulfophenylamino)-1,3,5-triazin | grünstichig blau |
| 43 | 2-(3′-Amino-4′-sulfophenylamino)-4-fluor-6-(2″-chlor-5″-sulfophenyl-amino)-1,3,5-triazin | 2-(4′-Amino-2′,5′-disulfophenylamino)-4-fluor-6-(β-hydroxyäthylamino-1,3,5-triazin | grünstichig blau |
| 44 | 2-(3′-Amino-4′-sulfophenylamino)-4-fluor-6-(2″-chlor-5″-sulfophenyl-amino)-1,3,5-triazin | 2-(4′-Amino-2′,5′-disulfophenylamino)-4-fluor-6-(β-sulfoäthylamino)-1,3,5-triazin | grünstichig blau |
| 45 | 2-(3′-Amino-4′-sulfophenylamino)-4-fluor-6-(β-hydroxyäthylamino)-1,3,5-triazin | 2-(3′-Amino-4′-sulfophenylamino)-4-fluor-6-(2″-sulfophenylamino)-1,3,5-triazin | blau |
| 46 | 2-(3′-Amino-4′-sulfophenylamino)-4-fluor-6-(β-hydroxyäthylamino)-1,3,5-triazin | 2-(3′-Amino-4′-sulfophenylamino)-4-fluor-6-(1″-sulfonaphth-2″-yl-amino)-1,3,5-triazin | blau |
| 47 | 2-(3′-Amino-4′-sulfophenylamino)-4-fluor-6-(β-hydroxyäthylamino)-1,3,5-triazin | 2-(3′-Amino-4′-sulfophenylamino)-4-fluor-6-(2″-chlor-5″-sulfophenylamino)-1,3,5-triazin | blau |
| 48 | 2-(3′-Amino-4′-sulfophenylamino)-4-fluor-6-(β-hydroxyäthylamino)-1,3,5-triazin | 2-(3′-Amino-4′-sulfophenylamino)-4-fluor-6-(β-hydroxyäthylamino)-1,3,5-triazin | blau |
| 49 | 2-(3′-Amino-4′-sulfophenylamino)-4-fluor-6-(β-hydroxyäthylamino)-1,3,5-triazin | 2-(3′-Amino-4′-sulfophenylamino)-4-fluor-6-(β-sulfoäthylamino)-1,3,5-triazin | blau |
| 50 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(2″-sulfophenylamino)-1,3,5-triazin | grünstichig blau |
| 51 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 52 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(2″-chlor-5″-sulfophenylamino)-1,3,5-triazin | grünstichig blau |
| 53 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(β-hydroxyäthylamino)-1,3,5-triazin | grünstichig blau |
| 54 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(β-sulfoäthylamino)-1,3,5-triazin | grünstichig blau |
| 55 | 2-(3′-Amino-4′-sulfophenylamino)-4-fluor-6-(β-hydroxyäthylamino)-1,3,5-triazin | 2-(4′-Amino-2′,5′-disulfophenylamino)-4-fluor-6-(2″-sulfophenylamino)-1,3,5-triazin | grünstichig blau |
| 56 | 2-(3′-Amino-4′-sulfophenylamino)-4-fluor-6-(β-hydroxyäthylamino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 57 | 2-(3′-Amino-4′-sulfophenylamino)-4-fluor-6-(β-hydroxyäthylamino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 58 | 2-(3′-Amino-4′-sulfophenylamino)-4-fluor-6-(β-hydroxyäthylamino)-1,3,5-triazin | 2-(4′-Amino-2′,5′-disulfophenylamino)-4-fluor-6-(β-hydroxyäthylamino)-1,3,5-triazin | grünstichig blau |
| 59 | 2-(3′-Amino-4′-sulfophenylamino)-4-fluor-6-(β-hydroxyäthylamino)-1,3,5-triazin | 2-(4′-Amino-2′,5′-disulfophenylamino)-4-fluor-6-(β-sulfoäthylamino)-1,3,5-triazin | grünstichig blau |
| 60 | 2-(3′-Amino-4′-sulfophenylamino)-4-fluor-6-(β-sulfoäthylamino)-1,3,5-triazin | 2-(3′-Amino-4′-sulfophenylamino)-4-fluor-6-(2″-sulfophenylamino)-1,3,5-triazin | blau |

Tabelle 1 (Fortsetzung)

| Nr. | Diazokomponente | Diazokomponente | Farbton auf Baumwolle |
|---|---|---|---|
| 61 | 2-(3′-Amino-4′-sulfophenylamino)-4-fluor-6-(β-sulfoäthylamino)-1,3,5-triazin | 2-(3′-Amino-4′-sulfophenylamino)-4-fluor-6-(1″sulfonaphth-2″-yl-amino)-1,3,5-triazin | blau |
| 62 | 2-(3′-Amino-4′-sulfophenylamino)-4-fluor-6-(β-sulfoäthylamino)-1,3,5-triazin | 2-(3′-Amino-4′-sulfophenylamino)-4-fluor-6-(2″-chlor-5″-sulfophenylamino)-1,3,5-triazin | blau |
| 63 | 2-(3′-Amino-4′-sulfophenylamino)-4-fluor-6-(β-sulfoäthylamino)-1,3,5-triazin | 2-(3′-Amino-4′-sulfophenylamino)-4-fluor-6-(β-hydroxyäthylamino)-1,3,5-triazin | blau |
| 64 | 2-(3′-Amino-4′-sulfophenylamino)-4-fluor-6-(β-sulfoäthylamino)-1,3,5-triazin | 2-(3′-Amino-4′-sulfophenylamino)-4-fluor-6-(β-sulfoäthylamino)-1,3,5-triazin | blau |
| 65 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(2″-sulfophenylamino)-1,3,5-triazin | grünstichig blau |
| 66 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 67 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(2″-chlor-5″-sulfophenylamino)-1,3,5-triazin | grünstichig blau |
| 68 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(β-hydroxyäthylamino)-1,3,5-triazin | grünstichig blau |
| 69 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(β-sulfoäthylamino)-1,3,5-triazin | grünstichig blau |
| 70 | 2-(3′-Amino-4′-sulfophenylamino)-4-fluor-6-(β-sulfoäthylamino)-1,3,5-triazin | 2-(4′-Amino-2′,5′-disulfophenylamino)-4-fluor-6-(2″-sulfophenylamino)-1,3,5-triazin | grünstichig blau |
| 71 | 2-(3′-Amino-4′-sulfophenylamino)-4-fluor-6-(β-sulfoäthylamino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 72 | 2-(3′-Amino-4′-sulfophenylamino)-4-fluor-6-(β-sulfoäthylamino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 73 | 2-(3′-Amino-4′-sulfophenylamino)-4-fluor-6-(β-sulfoäthylamino)-1,3,5-triazin | 2-(4′-Amino-2′,5′-disulfophenylamino)-4-fluor-6-(β-hydroxyäthylamino)-1,3,5-triazin | grünstichig blau |
| 74 | 2-(3′-Amino-4′-sulfophenylamino)-4-fluor-6-(β-sulfoäthylamino)-1,3,5-triazin | 2-(4′-Amino-2′,5′-disulfophenylamino)-4-fluor-6-(β-sulfoäthylamino)-1,3,5-triazin | grünstichig blau |
| 75 | 2-(4′-Amino-3′-sulfophenylamino)-4-fluor-6-(2″-sulfophenylamino)-1,3,5-triazin | 2-(3′-Amino-4′-sulfophenylamino)-4-fluor-6-(2″-sulfophenylamino)-1,3,5-triazin | grünstichig blau |
| 76 | 2-(4′-Amino-3′-sulfophenylamino)-4-fluor-6-(2″-sulfophenylamino)-1,3,5-triazin | 2-(3′-Amino-4′-sulfophenylamino)-4-fluor-6-(1″-sulfonaphth-2″-yl-amino)-1,3,5-triazin | grünstichig blau |
| 77 | 2-(4′-Amino-3′-sulfophenylamino)-4-fluor-6-(2″-sulfophenylamino)-1,3,5-triazin | 2-(3′-Amino-4′-sulfophenylamino)-4-fluor-6-(2″-chlor-5″-sulfophenylamino)-1,3,5-triazin | grünstichig blau |
| 78 | 2-(4′-Amino-3′-sulfophenylamino)-4-fluor-6-(2″-sulfophenylamino)-1,3,5-triazin | 2-(3′-Amino-4′-sulfophenylamino)-4-fluor-6-(β-hydroxyäthylamino)-1,3,5-triazin | grünstichig blau |
| 79 | 2-(4′-Amino-3′-sulfophenylamino)-4-fluor-6-(2″-sulfophenylamino)-1,3,5-triazin | 2-(3′-Amino-4′-sulfophenylamino)-4-fluor-6-(β-sulfoäthylamino)-1,3,5-triazin | grünstichig blau |
| 80 | 2-(4′-Amino-3′-sulfophenylamino)-4-fluor-6-(2″-sulfophenylamino)-1,3,5-triazin | 2-(4′-Amino-2′,5′-disulfophenylamino)-4-fluor-6-(2″-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 81 | 2-(4′-Amino-3′-sulfophenylamino)-4-fluor-6-(2″-sulfophenylamino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 82 | 2-(4′-Amino-3′-sulfophenylamino)-4-fluor-6-(2″-sulfophenylamino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 83 | 2-(4′-Amino-3′-sulfophenylamino)-4-fluor-6-(2″-sulfophenylamino)-1,3,5-triazin | 2-(4′-Amino-2′,5′-disulfophenylamino)-4-fluor-6-(β-hydroxyäthylamino)-1,3,5-triazin | grünstichig blau |
| 84 | 2-(4′-Amino-3′-sulfophenylamino)-4-fluor-6-(2″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 85 | 2-(4′-Amino-3′-sulfophenylamino)-4-fluor-6-(1″-sulfonaphth-2″-yl-amino)-1,3,5-triazin | 2-(3′-Amino-4′sulfophenylamino)-4-fluor-6-(2″-sulfophenylamino)-1,3,5-triazin | grünstichig blau |
| 86 | 2-(4′-Amino-3′-sulfophenylamino)-4-fluor-6-(1″-sulfonaphth-2″-yl-amino)-1,3,5-triazin | 2-(3′-Amino-4′sulfophenylamino)-4-fluor-6-(1″-sulfonaphth-2″-yl-amino)-1,3,5-triazin | grünstichig blau |
| 87 | 2-(4′-Amino-3′-sulfophenylamino)-4-fluor-6-(1″-sulfonaphth-2″-yl-amino)-1,3,5-triazin | 2-(3′-Amino-4′sulfophenylamino)-4-fluor-6-(2″-chlor-5″-sulfophenylamino)-1,3,5-triazin | grünstichig blau |
| 88 | 2-(4′-Amino-3′-sulfophenylamino)-4-fluor-6-(1″-sulfonaphth-2″-yl-amino)-1,3,5-triazin | 2-(3′-Amino-4′sulfophenylamino)-4-fluor-6-(β-hydroxyäthylamino)-1,3,5-triazin | grünstichig blau |
| 89 | 2-(4′-Amino-3′-sulfophenylamino)-4-fluor-6-(1″-sulfonaphth-2″-yl-amino)-1,3,5-triazin | 2-(3′-Amino-4′sulfophenylamino)-4-fluor-6-(β-sulfoäthylamino)-1,3,5-triazin | grünstichig blau |
| 90 | 2-(4′-Amino-3′-sulfophenylamino)-4-fluor-6-(1″-sulfonaphth-2″-yl-amino)-1,3,5-triazin | 2-(4′-Amino-2′,5′-disulfophenylamino)-4-fluor-6-(2″-sulfophenylamino)-1,3,5-triazin | grünstichig blau |
| 91 | 2-(4′-Amino-3′-sulfophenylamino)-4-fluor-6-(1″-sulfonaphth-2″-yl-amino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 92 | 2-(4′-Amino-3′-sulfophenylamino)-4-fluor-6-(1″-sulfonaphth-2″-yl-amino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 93 | 2-(4′-Amino-3′-sulfophenylamino)-4-fluor-6-(1″-sulfonaphth-2″-yl-amino)-1,3,5-triazin | 2-(4′-Amino-2′,5′-disulfophenylamino)-4-fluor-6-(β-hydroxyäthylamino)-1,3,5-triazin | grünstichig blau |
| 94 | 2-(4′-Amino-3′-sulfophenylamino)-4-fluor-6-(1″-sulfonaphth-2″-yl-amino)-1,3,5-triazin | 2-(4′-Amino-2′,5′-disulfophenylamino)-4-fluor-6-(β-sulfoäthylamino)-1,3,5-triazin | grünstichig blau |
| 95 | 2-(4′-Amino-3′-sulfophenylamino)-4-fluor-6-(2″-chlor-5″-sulfophenyl-amino)-1,3,5-triazin | 2-(3′-Amino-4′-sulfophenylamino)-4-fluor-6-(2″-sulfophenylamino)-1,3,5-triazin | grünstichig blau |
| 96 | 2-(4′-Amino-3′-sulfophenylamino)-4-fluor-6-(2″-chlor-5″-sulfophenyl-amino)-1,3,5-triazin | 2-(3′-Amino-4′-sulfophenylamino)-4-fluor-6-(1″-sulfonaphth-2″-yl-amino)-1,3,5-triazin | grünstichig blau |
| 97 | 2-(4′-Amino-3′-sulfophenylamino)-4-fluor-6-(2″-chlor-5″-sulfophenyl-amino)-1,3,5-triazin | 2-(3′-Amino-4′-sulfophenylamino)-4-fluor-6-(2″-chlor-5″-sulfophenylamino)-1,3,5-triazin | grünstichig blau |
| 98 | 2-(4′-Amino-3′-sulfophenylamino)-4-fluor-6-(2″-chlor-5″-sulfophenyl-amino)-1,3,5-triazin | 2-(3′-Amino-4′-sulfophenylamino)-4-fluor-6-(β-hydroxyäthylamino)-1,3,5-triazin | grünstichig blau |
| 99 | 2-(4′-Amino-3′-sulfophenylamino)-4-fluor-6-(2″-chlor-5″-sulfophenyl-amino)-1,3,5-triazin | 2-(3′-Amino-4′-sulfophenylamino)-4-fluor-6-(β-sulfoäthylamino)-1,3,5-triazin | grünstichig blau |
| 100 | 2-(4′-Amino-3′-sulfophenylamino)-4-fluor-6-(2″-chlor-5″-sulfophenyl-amino)-1,3,5-triazin | 2-(4′-Amino-2′,5′-disulfophenylamino)-4-fluor-6-(2″-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 101 | 2-(4'-Amino-3'-sulfophenylamino)-4-fluor-6-(2''-chlor-5''-sulfophenyl-amino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 102 | 2-(4'-Amino-3'-sulfophenylamino)-4-fluor-6-(2''-chlor-5''-sulfophenyl-amino)-1,3,5-triazin | 2-(4'-Amino-2',5'-disulfophenylamino)-4-fluor-6-(2''-chlor-5''-sulfophenylamino)-1,3,5-triazin | grünstichig blau |
| 103 | 2-(4'-Amino-3'-sulfophenylamino)-4-fluor-6-(2''-chlor-5''-sulfophenyl-amino)-1,3,5-triazin | 2-(4'-Amino-2',5'-disulfophenylamino)-4-fluor-6-(β-hydroxyäthylamino)-1,3,5-triazin | grünstichig blau |
| 104 | 2-(4'-Amino-3'-sulfophenylamino)-4-fluor-6-(2''-chlor-5''-sulfophenyl-amino)-1,3,5-triazin | 2-(4'-Amino-2',5'-disulfophenylamino)-4-fluor-6-(β-sulfoäthylamino)-1,3,5-triazin | grünstichig blau |
| 105 | 2-(4'-Amino-3'-sulfophenylamino)-4-fluor-6-(β-hydroxyäthylamino)-1,3,5-triazin | 2-(3'-Amino-4'sulfophenylamino)-4-fluor-6-(2''-sulfophenylamino)-1,3,5-triazin | grünstichig blau |
| 106 | 2-(4'-Amino-3'-sulfophenylamino)-4-fluor-6-(β-hydroxyäthylamino)-1,3,5-triazin | 2-(3'-Amino-4'sulfophenylamino)-4-fluor-6-(1''-sulfonaphth-2''-yl-amino)-1,3,5-triazin | grünstichig blau |
| 107 | 2-(4'-Amino-3'-sulfophenylamino)-4-fluor-6-(β-hydroxyäthylamino)-1,3,5-triazin | 2-(3'-Amino-4'sulfophenylamino)-4-fluor-6-(2''-chlor-5''-sulfophenylamino)-1,3,5-triazin | grünstichig blau |
| 108 | 2-(4'-Amino-3'-sulfophenylamino)-4-fluor-6-(β-hydroxyäthylamino)-1,3,5-triazin | 2-(3'-Amino-4'sulfophenylamino)-4-fluor-6-(β-hydroxyäthylamino)-1,3,5-triazin | grünstichig blau |
| 109 | 2-(4'-Amino-3'-sulfophenylamino)-4-fluor-6-(β-hydroxyäthylamino)-1,3,5-triazin | 2-(3'-Amino-4'sulfophenylamino)-4-fluor-6-(β-sulfoäthylamino)-1,3,5-triazin | grünstichig blau |
| 110 | 2-(4'-Amino-3'-sulfophenylamino)-4-fluor-6-(β-hydroxyäthylamino)-1,3,5-triazin | 2-(4'-Amino-2',5'-disulfophenylamino)-4-fluor-6-(2''-sulfophenylamino)-1,3,5-triazin | grünstichig blau |
| 111 | 2-(4'-Amino-3'-sulfophenylamino)-4-fluor-6-(β-hydroxyäthylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 112 | 2-(4'-Amino-3'-sulfophenylamino)-4-fluor-6-(β-hydroxyäthylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 113 | 2-(4'-Amino-3'-sulfophenylamino)-4-fluor-6-(β-hydroxyäthylamino)-1,3,5-triazin | 2-(4'-Amino-2',5'-disulfophenylamino)-4-fluor-6-(β-hydroxyäthylamino)-1,3,5-triazin | grünstichig blau |
| 114 | 2-(4'-Amino-3'-sulfophenylamino)-4-fluor-6-(β-hydroxyäthylamino)-1,3,5-triazin | 2-(4'-Amino-2',5'-disulfophenylamino)-4-fluor-6-(β-sulfoäthylamino)-1,3,5-triazin | grünstichig blau |
| 115 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(2''-sulfophenylamino)-1,3,5-triazin | grünstichig blau |
| 116 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(1''-sulfonaphth-2''-yl-amino)-1,3,5-triazin | grünstichig blau |
| 117 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(2''-chlor-5''-sulfophenylamino)-1,3,5-triazin | grünstichig blau |
| 118 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(β-hydroxyäthylamino)-1,3,5-triazin | grünstichig blau |
| 119 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(β-sulfoäthylamino)-1,3,5-triazin | grünstichig blau |
| 120 | 2-(4'-Amino-3'-sulfophenylamino)-4-fluor-6-(β-sulfoäthylamino)-1,3,5-triazin | 2-(4'-Amino-2',5'-disulfophenylamino)-4-fluor-6-(2''-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 121 | 2-(4′-Amino-3′-sulfophenylamino)-4-fluor-6-(β-sulfoäthylamino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 122 | 2-(4′-Amino-3′-sulfophenylamino)-4-fluor-6-(β-sulfoäthylamino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 123 | 2-(4′-Amino-3′-sulfophenylamino)-4-fluor-6-(β-sulfoäthylamino)-1,3,5-triazin | 2-(4′-Amino-2′,5′-disulfophenylamino)-4-fluor-6-(β-hydroxyäthylamino)-1,3,5-triazin | grünstichig blau |
| 124 | 2-(4′-Amino-3′-sulfophenylamino)-4-fluor-6-(β-sulfoäthylamino)-1,3,5-triazin | 2-(4′-Amino-2′,5′-disulfophenylamino)-4-fluor-6-(β-sulfoäthylamino)-1,3,5-triazin | grünstichig blau |
| 125 | 2-(4′-Amino-2′,5′-disulfophenylamino)-4-fluor-6-(2″-sulfophenylamino)-1,3,5-triazin | 2-(3′-Amino-4′-sulfophenylamino)-4-fluor-6-(2″-sulfophenylamino)-1,3,5-triazin | grünstichig blau |
| 126 | 2-(4′-Amino-2′,5′-disulfophenylamino)-4-fluor-6-(2″-sulfophenylamino)-1,3,5-triazin | 2-(3′-Amino-4′-sulfophenylamino)-4-fluor-6-(1″-sulfonaphth-2″-yl-amino)-1,3,5-triazin | grünstichig blau |
| 127 | 2-(4′-Amino-2′,5′-disulfophenylamino)-4-fluor-6-(2″-sulfophenylamino)-1,3,5-triazin | 2-(3′-Amino-4′-sulfophenylamino)-4-fluor-6-(2″-chlor-5″-sulfophenylamino)-1,3,5-triazin | grünstichig blau |
| 128 | 2-(4′-Amino-2′,5′-disulfophenylamino)-4-fluor-6-(2″-sulfophenylamino)-1,3,5-triazin | 2-(3′-Amino-4′-sulfophenylamino)-4-fluor-6-(β-hydroxyäthylamino)-1,3,5-triazin | grünstichig blau |
| 129 | 2-(4′-Amino-2′,5′-disulfophenylamino)-4-fluor-6-(2″-sulfophenylamino)-1,3,5-triazin | 2-(3′-Amino-4′-sulfophenylamino)-4-fluor-6-(β-sulfoäthylamino)-1,3,5-triazin | grünstichig blau |
| 130 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(2″-sulfophenylamino)-1,3,5-triazin | grünstichig blau |
| 131 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 132 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(2″-chlor-5″-sulfophenylamino)-1,3,5-triazin | grünstichig blau |
| 133 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(β-hydroxyäthylamino)-1,3,5-triazin | grünstichig blau |
| 134 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(β-sulfoäthylamino)-1,3,5-triazin | grünstichig blau |
| 135 | 2-(4′-Amino-2′,5′-disulfophenylamino)-4-fluor-6-(2″-sulfophenylamino)-1,3,5-triazin | 2-(4′-Amino-2′,5′-disulfophenylamino)-4-fluor-6-(2″-sulfophenylamino)-1,3,5-triazin | grünstichig blau |
| 136 | 2-(4′-Amino-2′,5′-disulfophenylamino)-4-fluor-6-(2″-sulfophenylamino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 137 | 2-(4′-Amino-2′,5′-disulfophenylamino)-4-fluor-6-(2″-sulfophenylamino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 138 | 2-(4′-Amino-2′,5′-disulfophenylamino)-4-fluor-6-(2″-sulfophenylamino)-1,3,5-triazin | 2-(4′-Amino-2′,5′-disulfophenylamino)-4-fluor-6-(β-hydroxyäthylamino)-1,3,5-triazin | grünstichig blau |
| 139 | 2-(4′-Amino-2′,5′-disulfophenylamino)-4-fluor-6-(2″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 140 | 2-(4′-Amino-2′,5′-disulfophenylamino)-4-fluor-6-(1″-sulfonaphth-2″-yl-amino)-1,3,5-triazin | 2-(3′-Amino-4′-sulfophenylamino)-4-fluor-6-(2″-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 141 | 2-(4′-Amino-2′,5′-disulfophenylamino)-4-fluor-6-(1″-sulfonaphth-2″-yl-amino)-1,3,5-triazin | 2-(3′-Amino-4′-sulfophenylamino)-4-fluor-6-(1″-sulfonaphth-2″-yl-amino)1,3,5-triazin | grünstichig blau |
| 142 | 2-(4′-Amino-2′,5′-disulfophenylamino)-4-fluor-6-(1″-sulfonaphth-2″-yl-amino)-1,3,5-triazin | 2-(3′-Amino-4′-sulfophenylamino)-4-fluor-6-(2″-chlor-5″-sulfophenylamino)-1,3,5-triazin | grünstichig blau |
| 143 | 2-(4′-Amino-2′,5′-disulfophenylamino)-4-fluor-6-(1″-sulfonaphth-2″-yl-amino)-1,3,5-triazin | 2-(3′-Amino-4′-sulfophenylamino)-4-fluor-6-(β-hydroxyäthylamino)-1,3,5-triazin | grünstichig blau |
| 144 | 2-(4′-Amino-2′,5′-disulfophenylamino)-4-fluor-6-(1″-sulfonaphth-2″-yl-amino)-1,3,5-triazin | 2-(3′-Amino-4′-sulfophenylamino)-4-fluor-6-(β-sulfoäthylamino)-1,3,5-triazin | grünstichig blau |
| 145 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(2″-sulfophenylamino)-1,3,5-triazin | grünstichig blau |
| 146 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(1″-sulfonaphth-2″-yl-amino)-1,3,5-triazin | grünstichig blau |
| 147 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(2″-chlor-5″-sulfophenylamino)-1,3,5-triazin | grünstichig blau |
| 148 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(β-hydroxyäthylamino)-1,3,5-triazin | grünstichig blau |
| 149 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(β-sulfoäthylamino)-1,3,5-triazin | grünstichig blau |
| 150 | 2-(4′-Amino-2′,5′-disulfophenylamino)-4-fluor-6-(1″-sulfonaphth-2″-yl-amino)-1,3,5-triazin | 2-(4′-Amino-2′,5′-disulfophenylamino)-4-fluor-6-(2″-sulfophenylamino)-1,3,5-triazin | grünstichig blau |
| 151 | 2-(4′-Amino-2′,5′-disulfophenylamino)-4-fluor-6-(1″-sulfonaphth-2″-yl-amino)-1,3,5-triazin | 2-(4′-Amino-2′,5′-disulfophenylamino)-4-fluor-6-(1″-sulfonaphth-2″-yl-amino)1,3,5-triazin | grünstichig blau |
| 152 | 2-(4′-Amino-2′,5′-disulfophenylamino)-4-fluor-6-(1″-sulfonaphth-2″-yl-amino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 153 | 2-(4′-Amino-2′,5′-disulfophenylamino)-4-fluor-6-(1″-sulfonaphth-2″-yl-amino)-1,3,5-triazin | 2-(4′-Amino-2′,5′-disulfophenylamino)-4-fluor-6-(β-hydroxyäthylamino)-1,3,5-triazin | grünstichig blau |
| 154 | 2-(4′-Amino-2′,5′-disulfophenylamino)-4-fluor-6-(1″-sulfonaphth-2″-yl-amino)-1,3,5-triazin | 2-(4′-Amino-2′,5′-disulfophenylamino)-4-fluor-6-(β-sulfoäthylamino)-1,3,5-triazin | grünstichig blau |
| 155 | 2-(4′-Amino-2′,5′-disulfophenylamino)-4-fluor-6-(2″-chlor-5″-sulfophenylamino)-1,3,5-triazin | 2-(3′-Amino-4′-sulfophenylamino)-4-fluor-6-(2″-sulfophenylamino)-1,3,5-triazin | grünstichig blau |
| 156 | 2-(4′-Amino-2′,5′-disulfophenylamino)-4-fluor-6-(2″-chlor-5″-sulfophenylamino)-1,3,5-triazin | 2-(3′-Amino-4′sulfophenylamino)-4-fluor-6-(1″-sulfonaphth-2″-yl-amino)-1,3,5-triazin | grünstichig blau |
| 157 | 2-(4′-Amino-2′,5′-disulfophenylamino)-4-fluor-6-(2″-chlor-5″-sulfophenylamino)-1,3,5-triazin | 2-(3′-Amino-4′-sulfophenylamino)-4-fluor-6-(2″-chlor-5″-sulfophenylamino)-1,3,5-triazin | grünstichig blau |
| 158 | 2-(4′-Amino-2′,5′-disulfophenylamino)-4-fluor-6-(2″-chlor-5″-sulfophenylamino)-1,3,5-triazin | 2-(3′-Amino-4′-sulfophenylamino)-4-fluor-6-(β-hydroxyäthylamino)-1,3,5-triazin | grünstichig blau |
| 159 | 2-(4′-Amino-2′,5′-disulfophenylamino)-4-fluor-6-(2″-chlor-5″-sulfophenylamino)-1,3,5-triazin | 2-(3′-Amino-4′-sulfophenylamino)-4-fluor-6-(β-sulfoäthylamino)-1,3,5-triazin | grünstichig blau |
| 160 | 2-(4′-Amino-2′,5′-disulfophenylamino)-4-fluor-6-(2″-chlor-5″-sulfophenylamino)-1,3,5-triazin | 2-(4′-Amino-3′-sulfophenylamino)-4-fluor-6-(2″-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 161 | 2-(4'-Amino-2',5'-disulfophenylamino)-4-fluor-6-(2''-chlor-5''-sulfophenylamino)-1,3,5-triazin | 2-(4'-Amino-3'-sulfophenylamino)-4-fluor-6-(1''-sulfonaphth-2''-yl-amino)-1,3,5-triazin | grünstichig blau |
| 162 | 2-(4'-Amino-2',5'-disulfophenylamino)-4-fluor-6-(2''-chlor-5''-sulfophenylamino)-1,3,5-triazin | 2-(4'-Amino-3'-sulfophenylamino)-4-fluor-6-(2''-chlor-5''-sulfophenylamino)-1,3,5-triazin | grünstichig blau |
| 163 | 2-(4'-Amino-2',5'-disulfophenylamino)-4-fluor-6-(2''-chlor-5''-sulfophenylamino)-1,3,5-triazin | 2-(4'-Amino-3'-sulfophenylamino)-4-fluor-6-(β-hydroxyäthylamino)-1,3,5-triazin | grünstichig blau |
| 164 | 2-(4'-Amino-2',5'-disulfophenylamino)-4-fluor-6-(2''-chlor-5''-sulfophenylamino)-1,3,5-triazin | 2-(4'-Amino-3'-sulfophenylamino)-4-fluor-6-(β-sulfoäthylamino)-1,3,5-triazin | grünstichig blau |
| 165 | 2-(4'-Amino-2',5'-disulfophenylamino)-4-fluor-6-(2''-chlor-5''-sulfophenylamino)-1,3,5-triazin | 2-(4'-Amino-2',5'-disulfophenylamino)-4-fluor-6-(2''-sulfophenylamino)-1,3,5-triazin | grünstichig blau |
| 166 | 2-(4'-Amino-2',5'-disulfophenylamino)-4-fluor-6-(2''-chlor-5''-sulfophenylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 167 | 2-(4'-Amino-2',5'-disulfophenylamino)-4-fluor-6-(2''-chlor-5''-sulfophenylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 168 | 2-(4'-Amino-2',5'-disulfophenylamino)-4-fluor-6-(2''-chlor-5''-sulfophenylamino)-1,3,5-triazin | 2-(4'-Amino-2',5'-disulfophenylamino)-4-fluor-6-(β-hydroxyäthylamino)-1,3,5-triazin | grünstichig blau |
| 169 | 2-(4'-Amino-2',5'-disulfophenylamino)-4-fluor-6-(2''-chlor-5''-sulfophenylamino)-1,3,5-triazin | 2-(4'-Amino-2',5'-disulfophenylamino)-4-fluor-6-(β-sulfoäthylamino)-1,3,5-triazin | grünstichig blau |
| 170 | 2-(4'-Amino-2',5'-disulfophenylamino)-4-fluor-6-(β-hydroxyäthylamino)-1,3,5-triazin | 2-(3'-Amino-4'-sulfophenylamino)-4-fluor-6-(2''-sulfophenylamino)-1,3,5-triazin | grünstichig blau |
| 171 | 2-(4'-Amino-2',5'-disulfophenylamino)-4-fluor-6-(β-hydroxyäthylamino)-1,3,5-triazin | 2-(3'-Amino-4'-sulfophenylamino)-4-fluor-6-(1''-sulfonaphth-2''-yl-amino)-1,3,5-triazin | grünstichig blau |
| 172 | 2-(4'-Amino-2',5'-disulfophenylamino)-4-fluor-6-(β-hydroxyäthylamino)-1,3,5-triazin | 2-(3'-Amino-4'-sulfophenylamino)-4-fluor-6-(2''-chlor-5''-sulfophenylamino)-1,3,5-triazin | grünstichig blau |
| 173 | 2-(4'-Amino-2',5'-disulfophenylamino)-4-fluor-6-(β-hydroxyäthylamino)-1,3,5-triazin | 2-(3'-Amino-4'-sulfophenylamino)-4-fluor-6-(β-hydroxyäthylamino)-1,3,5-triazin | grünstichig blau |
| 174 | 2-(4'-Amino-2',5'-disulfophenylamino)-4-fluor-6-(β-hydroxyäthylamino)-1,3,5-triazin | 2-(3'-Amino-4'-sulfophenylamino)-4-fluor-6-(β-sulfoäthylamino)-1,3,5-triazin | grünstichig blau |
| 175 | 2-(4'-Amino-2',5'-disulfophenylamino)-4-fluor-6-(β-hydroxyäthylamino)-1,3,5-triazin | 2-(4'-Amino-3'-sulfophenylamino)-4-fluor-6-(2''-sulfophenylamino)-1,3,5-triazin | grünstichig blau |
| 176 | 2-(4'-Amino-2',5'-disulfophenylamino)-4-fluor-6-(β-hydroxyäthylamino)-1,3,5-triazin | 2-(4'-Amino-3'-sulfophenylamino)-4-fluor-6-(1''-sulfonaphth-2''-yl-amino)-1,3,5-triazin | grünstichig blau |
| 177 | 2-(4'-Amino-2',5'-disulfophenylamino)-4-fluor-6-(β-hydroxyäthylamino)-1,3,5-triazin | 2-(4'-Amino-3'-sulfophenylamino)-4-fluor-6-(2''-chlor-5''-sulfophenylamino)-1,3,5-triazin | grünstichig blau |
| 178 | 2-(4'-Amino-2',5'-disulfophenylamino)-4-fluor-6-(β-hydroxyäthylamino)-1,3,5-triazin | 2-(4'-Amino-3'-sulfophenylamino)-4-fluor-6-(β-hydroxyäthylamino)-1,3,5-triazin | grünstichig blau |
| 179 | 2-(4'-Amino-2',5'-disulfophenylamino)-4-fluor-6-(β-hydroxyäthylamino)-1,3,5-triazin | 2-(4'-Amino-3'-sulfophenylamino)-4-fluor-6-(β-sulfoäthylamino)-1,3,5-triazin | grünstichig blau |
| 180 | 2-(4'-Amino-2',5'-disulfophenylamino)-4-fluor-6-(2''-chlor-5''-sulfophenylamino)-1,3,5-triazin | 2-(4'-Amino-2',5'-disulfophenylamino)-4-fluor-6-(2''-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 181 | 2-(4′-Amino-2′,5′-disulfophenylamino)-4-fluor-6-(2″-chlor-5″-sulfophenylamino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 182 | 2-(4′-Amino-2′,5′-disulfophenylamino)-4-fluor-6-(2″-chlor-5″-sulfophenylamino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 183 | 2-(4′-Amino-2′,5′-disulfophenylamino)-4-fluor-6-(2″-chlor-5″-sulfophenylamino)-1,3,5-triazin | 2-(4′-Amino-2′,5′-disulfophenylamino)-4-fluor-6-(β-hydroxyäthylamino)-1,3,5-triazin | grünstichig blau |
| 184 | 2-(4′-Amino-2′,5′-disulfophenylamino)-4-fluor-6-(2″-chlor-5″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 185 | 2-(4′-Amino-2′,5′-disulfophenylamino)-4-fluor-6-(β-sulfoäthylamino)-1,3,5-triazin | 2-(3′-Amino-4′-sulfophenylamino)-4-fluor-6-(2″-sulfophenylamino)-1,3,5-triazin | grünstichig blau |
| 186 | 2-(4′-Amino-2′,5′-disulfophenylamino)-4-fluor-6-(β-sulfoäthylamino)-1,3,5-triazin | 2-(3′-Amino-4′-sulfophenylamino)-4-fluor-6-(1″-sulfonaphth-2″-yl-amino)-1,3,5-triazin | grünstichig blau |
| 187 | 2-(4′-Amino-2′,5′-disulfophenylamino)-4-fluor-6-(β-sulfoäthylamino)-1,3,5-triazin | 2-(3′-Amino-4′-sulfophenylamino)-4-fluor-6-(2″-chlor-5″-sulfophenylamino)-1,3,5-triazin | grünstichig blau |
| 188 | 2-(4′-Amino-2′,5′-disulfophenylamino)-4-fluor-6-(β-sulfoäthylamino)-1,3,5-triazin | 2-(3′-Amino-4′-sulfophenylamino)-4-fluor-6-(β-hydroxyäthylamino)-1,3,5-triazin | grünstichig blau |
| 189 | 2-(4′-Amino-2′,5′-disulfophenylamino)-4-fluor-6-(β-sulfoäthylamino)-1,3,5-triazin | 2-(3′-Amino-4′-sulfophenylamino)-4-fluor-6-(β-sulfoäthylamino)-1,3,5-triazin | grünstichig blau |
| 190 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(2″-sulfophenylamino)-1,3,5-triazin | grünstichig blau |
| 191 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 192 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(2″-chlor-5″-sulfophenylamino)-1,3,5-triazin | grünstichig blau |
| 193 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(β-hydroxyäthylamino)-1,3,5-triazin | grünstichig blau |
| 194 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(β-sulfoäthylamino)-1,3,5-triazin | grünstichig blau |
| 195 | 2-(4′-Amino-2′,5′-disulfophenylamino)-4-fluor-6-(β-sulfoäthylamino)-1,3,5-triazin | 2-(4′-Amino-2′,5′-disulfophenylamino)-4-fluor-6-(2″-sulfophenylamino)-1,3,5-triazin | grünstichig blau |
| 196 | 2-(4′-Amino-2′,5′-disulfophenylamino)-4-fluor-6-(β-sulfoäthylamino)-1,3,5-triazin | 2-(4′-Amino-2′,5′-disulfophenylamino)-4-fluor-6-(1″-sulfonaphth-2″-yl-amino)-1,3,5-triazin | grünstichig blau |
| 197 | 2-(4′-Amino-2′,5′-disulfophenylamino)-4-fluor-6-(β-sulfoäthylamino)-1,3,5-triazin | 2-(4′-Amino-2′,5′-disulfophenylamino)-4-fluor-6-(2″-chlor-5″-sulfophenylamino)-1,3,5-triazin | grünstichig blau |
| 198 | 2-(4′-Amino-2′,5′-disulfophenylamino)-4-fluor-6-(β-sulfoäthylamino)-1,3,5-triazin | 2-(4′-Amino-2′,5′-disulfophenylamino)-4-fluor-6-(β-hydroxyäthylamino)-1,3,5-triazin | grünstichig blau |
| 199 | 2-(4′-Amino-2′,5′-disulfophenylamino)-4-fluor-6-(β-sulfoäthylamino)-1,3,5-triazin | 2-(4′-Amino-2′,5′-disulfophenylamino)-4-fluor-6-(β-sulfoäthylamino)-1,3,5-triazin | grünstichig blau |
| 200 | 2-(3′-Amino-4′-sulfophenylamino)-4-fluor-6-(1″-sulfonaphth-2″-yl-amino)-1,3,5-triazin | 2-(3′-Amino-4′-sulfophenylamino)-4-fluor-6-(2″-sulfophenylamino)-1,3,5-triazin | blau |

Tabelle 1 (Fortsetzung)

| Nr. | Diazokomponente | Diazokomponente | Farbton auf Baumwolle |
|---|---|---|---|
| 201 | 2-(3'-Amino-4'-sulfophenylamino)-4-fluor-6-(2''-chlor-5''-sulfophenylamino)-1,3,5-triazin | 2-(3'-Amino-4'-sulfophenylamino)-4-fluor-6-(2''-sulfophenylamino)-1,3,5-triazin | blau |
| 202 | 2-(3'-Amino-4'-sulfophenylamino)-4-fluor-6-(β-hydroxyäthylamino)-1,3,5-triazin | 2-(3'-Amino-4'-sulfophenylamino)-4-fluor-6-(2''-sulfophenylamino)-1,3,5-triazin | blau |
| 203 | 2-(3'-Amino-4'-sulfophenylamino)-4-fluor-6-(β-sulfoäthylamino)-1,3,5-triazin | 2-(3'-Amino-4'-sulfophenylamino)-4-fluor-6-(2''-sulfophenylamino)-1,3,5-triazin | blau |
| 204 | 2-(4'-Amino-3'-sulfophenylamino)-4-fluor-6-(2''-sulfophenylamino)-1,3,5-triazin | 2-(3'-Amino-4'-sulfophenylamino)-4-fluor-6-(2''-sulfophenylamino)-1,3,5-triazin | grünstichig blau |
| 205 | 2-(4'-Amino-3'-sulfophenylamino)-4-fluor-6-(1''-sulfonaphth-2''-yl-amino)-1,3,5-triazin | 2-(3'-Amino-4'-sulfophenylamino)-4-fluor-6-(2''-sulfophenylamino)-1,3,5-triazin | grünstichig blau |
| 206 | 2-(4'-Amino-3'-sulfophenylamino)-4-fluor-6-(2''-chlor-5''-sulfophenylamino)-1,3,5-triazin | 2-(3'-Amino-4'-sulfophenylamino)-4-fluor-6-(2''-sulfophenylamino)-1,3,5-triazin | grünstichig blau |
| 207 | 2-(4'-Amino-3'-sulfophenylamino)-4-fluor-6-(β-hydroxyäthylamino)-1,3,5-triazin | 2-(3'-Amino-4'-sulfophenylamino)-4-fluor-6-(2''-sulfophenylamino)-1,3,5-triazin | grünstichig blau |
| 208 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(2''-sulfophenylamino)-1,3,5-triazin | grünstichig blau |
| 209 | 2-(4'-Amino-2',5'-disulfophenylamino)-4-fluor-6-(2''-sulfophenylamino-1,3,5-triazin | 2-(3'-Amino-4'-sulfophenylamino)-4-fluor-6-(2''-sulfophenylamino)-1,3,5-triazin | grünstichig blau |
| 210 | 2-(4'-Amino-2',5'-disulfophenylamino)-4-fluor-6-(1''-sulfonaphth-2''-yl-amino)-1,3,5-triazin | 2-(3'-Amino-4'-sulfophenylamino)-4-fluor-6-(2''-sulfophenylamino)-1,3,5-triazin | grünstichig blau |
| 211 | 2-(4'-Amino-2',5'-disulfophenylamino)-4-fluor-6-(2''-chlor-5''-sulfophenylamino)-1,3,5-triazin | 2-(3'-Amino-4'-sulfophenylamino)-4-fluor-6-(2''-sulfophenylamino)-1,3,5-triazin | grünstichig blau |
| 212 | 2-(4'-Amino-2',5'-disulfophenylamino)-4-fluor-6-(β-hydroxyäthylamino)-1,3,5-triazin | 2-(3'-Amino-4'-sulfophenylamino)-4-fluor-6-(2''-sulfophenylamino)-1,3,5-triazin | grünstichig blau |
| 213 | 2-(4'-Amino-2',5'-disulfophenylamino)-4-fluor-6-(β-sulfoäthylamino)-1,3,5-triazin | 2-(3'-Amino-4'-sulfophenylamino)-4-fluor-6-(2''-sulfophenylamino)-1,3,5-triazin | grünstichig blau |
| 214 | 2-(3'-Amino-4'-sulfophenylamino)-4-fluor-6-(2''-sulfophenylamino)-1,3,5-triazin | 2-(3'-Amino-4'-sulfophenylamino)-4-fluor-6-(1''-sulfonaphth)-2''-yl-amino)-1,3,5-triazin | blau |
| 215 | 2-(3'-Amino-4'-sulfophenylamino)-4-fluor-6-(2''-chlor-5''-sulfophenylamino)-1,3,5-triazin | 2-(3'-Amino-4'-sulfophenylamino)-4-fluor-6-(1''-sulfonaphth)-2''-yl-amino)-1,3,5-triazin | blau |
| 216 | 2-(3'-Amino-4'-sulfophenylamino)-4-fluor-6-(β-hydroxyäthylamino)-1,3,5-triazin | 2-(3'-Amino-4'-sulfophenylamino)-4-fluor-6-(1''-sulfonaphth)-2''-yl-amino)-1,3,5-triazin | blau |
| 217 | 2-(3'-Amino-4'-sulfophenylamino)-4-fluor-6-(β-sulfoäthylamino)-1,3,5-triazin | 2-(3'-Amino-4'-sulfophenylamino)-4-fluor-6-(1''-sulfonaphth)-2''-yl-amino)-1,3,5-triazin | blau |
| 218 | 2-(4'-Amino-3'-sulfophenylamino)-4-fluor-6-(2''-sulfophenylamino)-1,3,5-triazin | 2-(3'-Amino-4'-sulfophenylamino)-4-fluor-6-(1''-sulfonaphth)-2''-yl-amino)-1,3,5-triazin | grünstichig blau |
| 219 | 2-(4'-Amino-3'-sulfophenylamino)-4-fluor-6-(1''-sulfonaphth-2''-yl-amino)-1,3,5-triazin | 2-(3'-Amino-4'-sulfophenylamino)-4-fluor-6-(1''-sulfonaphth)-2''-yl-amino)-1,3,5-triazin | grünstichig blau |
| 220 | 2-(4'-Amino-3'-sulfophenylamino)-4-fluor-6-(2''-chlor-5''-sulfophenylamino)-1,3,5-triazin | 2-(3'-Amino-4'-sulfophenylamino)-4-fluor-6-(1''-sulfonaphth)-2''-yl-amino)-1,3,5-triazin | grünstichig blau |
| 221 | 2-(4'-Amino-3'-sulfophenylamino)-4-fluor-6-(β-hydroxyäthylamino)-1,3,5-triazin | 2-(3'-Amino-4'-sulfophenylamino)-4-fluor-6-(1''-sulfonaphth)-2''-yl-amino)-1,3,5-triazin | grünstichig blau |
| 222 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(1''-sulfonaphth)-2''-yl-amino)-1,3,5-triazin | grünstichig blau |
| 223 | 2-(4'-Amino-2',5'-disulfophenylamino)-4-fluor-6-(2''-sulfophenylamino)-1,3,5-triazin | 2-(3'-Amino-4'-sulfophenylamino)-4-fluor-6-(1''-sulfonaphth)-2''-yl-amino)-1,3,5-triazin | grünstichig blau |

Tabelle 1 (Fortsetzung)

| Nr. | Diazokomponente | Diazokomponente | Farbton auf Baumwolle |
|---|---|---|---|
| 224 | 2-(4′-Amino-2′,5′-disulfophenylamino)-4-fluor-6-(1″-sulfonaphth-2″-yl-amino)-1,3,5-triazin | 2-(3′-Amino-4′-sulfophenylamino)-4-fluor-6-(1″-sulfonaphth)-2″-yl-amino)-1,3,5-triazin | grünstichig blau |
| 225 | 2-(4′-Amino-2′,5′-disulfophenylamino)-4-fluor-6-(2″-chlor-5″-sulfophenylamino)-1,3,5-triazin | 2-(3′-Amino-4′-sulfophenylamino)-4-fluor-6-(1″-sulfonaphth)-2″-yl-amino)-1,3,5-triazin | grünstichig blau |
| 226 | 2-(4′-Amino-2′,5′-disulfophenylamino)-4-fluor-6-(β-hydroxyäthylamino)-1,3,5-triazin | 2-(3′-Amino-4′-sulfophenylamino)-4-fluor-6-(1″-sulfonaphth)-2″-yl-amino)-1,3,5-triazin | grünstichig blau |
| 227 | 2-(4′-Amino-2′,5′-disulfophenylamino)-4-fluor-6-(β-sulfoäthylamino)-1,3,5-triazin | 2-(3′-Amino-4′-sulfophenylamino)-4-fluor-6-(1″-sulfonaphth)-2″-yl-amino)-1,3,5-triazin | grünstichig blau |
| 228 | 2-(3′-Amino-4′-sulfophenylamino)-4-fluor-6-(2″-sulfophenylamino)-1,3,5-triazin | 2-(3′-Amino-4′-sulfophenylamino)-4-fluor-6-(2″-chlor-5″-sulfophenylamino)-1,3,5-triazin | blau |
| 229 | 2-(3′-Amino-4′-sulfophenylamino)-4-fluor-6-(1″-sulfonaphth-2″-yl-1,3,5-triazin | 2-(3′-Amino-4′-sulfophenylamino)-4-fluor-6-(2″-chlor-5″-sulfophenylamino)-1,3,5-triazin | blau |
| 230 | 2-(3′-Amino-4′-sulfophenylamino)-4-fluor-6-(β-hydroxyäthylamino)-1,3,5-triazin | 2-(3′-Amino-4′-sulfophenylamino)-4-fluor-6-(2″-chlor-5″-sulfophenylamino)-1,3,5-triazin | blau |
| 231 | 2-(3′-Amino-4′-sulfophenylamino)-4-fluor-6-(β-sulfoäthylamino)-1,3,5-triazin | 2-(3′-Amino-4′-sulfophenylamino)-4-fluor-6-(2″-chlor-5″-sulfophenylamino)-1,3,5-triazin | blau |
| 232 | 2-(4′-Amino-3′-sulfophenylamino)-4-fluor-6-(2″-sulfophenylamino)-1,3,5-triazin | 2-(3′-Amino-4′-sulfophenylamino)-4-fluor-6-(2″-chlor-5″-sulfophenylamino)-1,3,5-triazin | grünstichig blau |
| 233 | 2-(4′-Amino-3′-sulfophenylamino)-4-fluor-6-(1″-sulfonaphth-2″-yl-amino)-1,3,5-triazin | 2-(3′-Amino-4′-sulfophenylamino)-4-fluor-6-(2″-chlor-5″-sulfophenylamino)-1,3,5-triazin | grünstichig blau |
| 234 | 2-(4′-Amino-3′-sulfophenylamino)-4-fluor-6-(2″-chlor-5″-sulfophenylamino)-1,3,5-triazin | 2-(3′-Amino-4′-sulfophenylamino)-4-fluor-6-(2″-chlor-5″-sulfophenylamino)-1,3,5-triazin | grünstichig blau |
| 235 | 2-(4′-Amino-3′-sulfophenylamino)-4-fluor-6-(β-hydroxyäthylamino)-1,3,5-triazin | 2-(3′-Amino-4′-sulfophenylamino)-4-fluor-6-(2″-chlor-5″-sulfophenylamino)-1,3,5-triazin | grünstichig blau |
| 236 | 2-(4′-Amino-3′-sulfophenylamino)-4-fluor-6-(β-sulfoäthylamino)-1,3,5-triazin | 2-(3′-Amino-4′-sulfophenylamino)-4-fluor-6-(2″-chlor-5″-sulfophenylamino)-1,3,5-triazin | grünstichig blau |
| 237 | 2-(4′-Amino-2′,5′-disulfophenylamino)-4-fluor-6-(2″-sulfophenylamino)-1,3,5-triazin | 2-(3′-Amino-4′-sulfophenylamino)-4-fluor-6-(2″-chlor-5″-sulfophenylamino)-1,3,5-triazin | grünstichig blau |
| 238 | 2-(4′-Amino-2′,5′-disulfophenylamino)-4-fluor-6-(1″-sulfonaphth-2″-yl-amino)-1,3,5-triazin | 2-(3′-Amino-4′-sulfophenylamino)-4-fluor-6-(2″-chlor-5″-sulfophenylamino)-1,3,5-triazin | grünstichig blau |
| 239 | 2-(4′-Amino-2′,5′-disulfophenylamino)-4-fluor-6-(2″-chlor-5″-sulfophenylamino)-1,3,5-triazin | 2-(3′-Amino-4′-sulfophenylamino)-4-fluor-6-(2″-chlor-5″-sulfophenylamino)-1,3,5-triazin | grünstichig blau |
| 240 | 2-(4′-Amino-2′,5′-disulfophenylamino)-4-fluor-6-(β-hydroxyäthylamino)-1,3,5-triazin | 2-(3′-Amino-4′-sulfophenylamino)-4-fluor-6-(2″-chlor-5″-sulfophenylamino)-1,3,5-triazin | grünstichig blau |
| 241 | 2-(4′-Amino-2′,5′-disulfophenylamino)-4-fluor-6-(β-sulfoäthylamino)-1,3,5-triazin | 2-(3′-Amino-4′-sulfophenylamino)-4-fluor-6-(2″-chlor-5″-sulfophenylamino)-1,3,5-triazin | grünstichig blau |
| 242 | 2-(3′-Amino-4′-sulfophenylamino)-4-fluor-6-(2″-sulfophenylamino)-1,3,5-triazin | 2-(3′-Amino-4′-sulfophenylamino)-4-fluor-6-(β-hydroxyäthylamino)-1,3,5-triazin | blau |
| 243 | 2-(3′-Amino-4′-sulfophenylamino)-4-fluor-6-(1″-sulfonaphth-2″-yl-amino)-1,3,5-triazin | 2-(3′-Amino-4′-sulfophenylamino)-4-fluor-6-(β-hydroxyäthylamino)-1,3,5-triazin | blau |

Tabelle 1 (Fortsetzung)

| Nr. | Diazokomponente | Diazokomponente | Farbton auf Baumwolle |
|---|---|---|---|
| 244 | 2-(3'-Amino-4'-sulfophenylamino)-4-fluor-6-(2''-chlor-5''-sulfophenylamino)-1,3,5-triazin | 2-(3'-Amino-4'-sulfophenylamino)-4-fluor-6-(β-hydroxyäthylamino)-1,3,5-triazin | blau |
| 245 | 2-(3'-Amino-4'-sulfophenylamino)-4-fluor-6-(β-sulfoäthylamino)-1,3,5-triazin | 2-(3'-Amino-4'-sulfophenylamino)-4-fluor-6-(β-hydroxyäthylamino)-1,3,5-triazin | blau |
| 246 | 2-(4'-Amino-3'-sulfophenylamino)-4-fluor-6-(2''-sulfophenylamino)-1,3,5-triazin | 2-(3'-Amino-4'-sulfophenylamino)-4-fluor-6-(β-hydroxyäthylamino)-1,3,5-triazin | grünstichig blau |
| 247 | 2-(4'-Amino-3'-sulfophenylamino)-4-fluor-6-(1''-sulfonaphth-2''-yl-amino)-1,3,5-triazin | 2-(3'-Amino-4'-sulfophenylamino)-4-fluor-6-(β-hydroxyäthylamino)-1,3,5-triazin | grünstichig blau |
| 248 | 2-(4'-Amino-3'-sulfophenylamino)-4-fluor-6-(2''-chlor-5''-sulfophenylamino)-1,3,5-triazin | 2-(3'-Amino-4'-sulfophenylamino)-4-fluor-6-(β-hydroxyäthylamino)-1,3,5-triazin | grünstichig blau |
| 249 | 2-(4'-Amino-3'-sulfophenylamino)-4-fluor-6-(β-hydroxyäthylamino)-1,3,5-triazin | 2-(3'-Amino-4'-sulfophenylamino)-4-fluor-6-(β-hydroxyäthylamino)-1,3,5-triazin | grünstichig blau |
| 250 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(β-hydroxyäthylamino)-1,3,5-triazin | grünstichig blau |
| 251 | 2-(4'-Amino-2',5'-disulfophenylamino)-4-fluor-6-(2''-sulfophenylamino)-1,3,5-triazin | 2-(3'-Amino-4'-sulfophenylamino)-4-fluor-6-(β-hydroxyäthylamino)-1,3,5-triazin | grünstichig blau |
| 252 | 2-(4'-Amino-2',5'-disulfophenylamino)-4-fluor-6-(1''-sulfonaphth-2''-yl-amino)-1,3,5-triazin | 2-(3'-Amino-4'-sulfophenylamino)-4-fluor-6-(β-hydroxyäthylamino)-1,3,5-triazin | grünstichig blau |
| 253 | 2-(4'-Amino-2',5'-disulfophenylamino)-4-fluor-6-(2''-chlor-5''-sulfophenylamino)-1,3,5-triazin | 2-(3'-Amino-4'-sulfophenylamino)-4-fluor-6-(β-hydroxyäthylamino)-1,3,5-triazin | grünstichig blau |
| 254 | 2-(4'-Amino-2',5'-disulfophenylamino)-4-fluor-6-(β-hydroxyäthylamino)-1,3,5-triazin | 2-(3'-Amino-4'-sulfophenylamino)-4-fluor-6-(β-hydroxyäthylamino)-1,3,5-triazin | grünstichig blau |
| 255 | 2-(4'-Amino-2',5'-disulfophenylamino)-4-fluor-6-(β-sulfoäthylamino)-1,3,5-triazin | 2-(3'-Amino-4'-sulfophenylamino)-4-fluor-6-(β-hydroxyäthylamino)-1,3,5-triazin | grünstichig blau |
| 256 | 2-(3'-Amino-4'-sulfophenylamino)-4-fluor-6-(2''-sulfophenylamino)-1,3,5-triazin | 2-(3'-Amino-4'-sulfophenylamino)-4-fluor-6-(β-sulfoäthylamino)-1,3,5-triazin | blau |
| 257 | 2-(3'-Amino-4'-sulfophenylamino)-4-fluor-6-(1''-sulfonaphth-2''-yl-amino)-1,3,5-triazin | 2-(3'-Amino-4'-sulfophenylamino)-4-fluor-6-(β-sulfoäthylamino)-1,3,5-triazin | blau |
| 258 | 2-(3'-Amino-4'-sulfophenylamino)-4-fluor-6-(2''-chlor-5''-sulfophenylamino)-1,3,5-triazin | 2-(3'-Amino-4'-sulfophenylamino)-4-fluor-6-(β-sulfoäthylamino)-1,3,5-triazin | blau |
| 259 | 2-(3'-Amino-4'-sulfophenylamino)-4-fluor-6-(β-hydroxyäthylamino)-1,3,5-triazin | 2-(3'-Amino-4'-sulfophenylamino)-4-fluor-6-(β-sulfoäthylamino)-1,3,5-triazin | blau |
| 260 | 2-(4'-Amino-3'-sulfophenylamino)-4-fluor-6-(2''-sulfophenylamino)-1,3,5-triazin | 2-(3'-Amino-4'-sulfophenylamino)-4-fluor-6-(β-sulfoäthylamino)-1,3,5-triazin | grünstichig blau |
| 261 | 2-(4'-Amino-3'-sulfophenylamino)-4-fluor-6-(1''-sulfonaphth-2''-yl-amino)-1,3,5-triazin | 2-(3'-Amino-4'-sulfophenylamino)-4-fluor-6-(β-sulfoäthylamino)-1,3,5-triazin | grünstichig blau |
| 262 | 2-(4'-Amino-3'-sulfophenylamino)-4-fluor-6-(2''-chlor-5''-sulfophenylamino)-1,3,5-triazin | 2-(3'-Amino-4'-sulfophenylamino)-4-fluor-6-(β-sulfoäthylamino)-1,3,5-triazin | grünstichig blau |
| 263 | 2-(4'-Amino-3'-sulfophenylamino)-4-fluor-6-(β-hydroxyäthylamino)-1,3,5-triazin | 2-(3'-Amino-4'-sulfophenylamino)-4-fluor-6-(β-sulfoäthylamino)-1,3,5-triazin | grünstichig blau |
| 264 | 2-(4'-Amino-3'-sulfophenylamino)-4-fluor-6-(β-sulfoäthylamino)-1,3,5-triazin | 2-(3'-Amino-4'-sulfophenylamino)-4-fluor-6-(β-sulfoäthylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 265 | 2-(4′-Amino-2′,5′-disulfophenylamino)-4-fluor-6-(2″-sulfophenylamino)-1,3,5-triazin | 2-(3′-Amino-4′-sulfophenylamino)-4-fluor-6-(β-sulfoäthylamino)-1,3,5-triazin | grünstichig blau |
| 266 | 2-(4′-Amino-2′,5′-disulfophenylamino)-4-fluor-6-(1″-sulfonaphth-2″-yl-amino)-1,3,5-triazin | 2-(3′-Amino-4′-sulfophenylamino)-4-fluor-6-(β-sulfoäthylamino)-1,3,5-triazin | grünstichig blau |
| 267 | 2-(4′-Amino-2′,5′-disulfophenylamino)-4-fluor-6-(2″-chlor-5″-sulfophenylamino)-1,3,5-triazin | 2-(3′-Amino-4′-sulfophenylamino)-4-fluor-6-(β-sulfoäthylamino)-1,3,5-triazin | grünstichig blau |
| 268 | 2-(4′-Amino-2′,5′-disulfophenylamino)-4-fluor-6-(β-hydroxyäthylamino)-1,3,5-triazin | 2-(3′-Amino-4′-sulfophenylamino)-4-fluor-6-(β-sulfoäthylamino)-1,3,5-triazin | grünstichig blau |
| 269 | 2-(4′-Amino-2′,5′-disulfophenylamino)-4-fluor-6-(β-sulfoäthylamino)-1,3,5-triazin | 2-(3′-Amino-4′-sulfophenylamino)-4-fluor-6-(β-sulfoäthylamino)-1,3,5-triazin | grünstichig blau |
| 270 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(2″-sulfophenylamino)-1,3,5-triazin | grünstichig blau |
| 271 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(2″-sulfophenylamino)-1,3,5-triazin | grünstichig blau |
| 272 | 2-(3′-Amino-4′-sulfophenylamino)-4-fluor-6-(2″-chlor-5″-sulfophenylamino)-1,3,5-triazin | 2-(4′-Amino-3′-sulfophenylamino)-4-fluor-6-(2″-sulfophenylamino)-1,3,5-triazin | grünstichig blau |
| 273 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(2″-sulfophenylamino)-1,3,5-triazin | grünstichig blau |
| 274 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(2″-sulfophenylamino)-1,3,5-triazin | grünstichig blau |
| 275 | 2-(4′-Amino-2′,5′-disulfophenylamino)-4-fluor-6-(2″-sulfophenylamino)-1,3,5-triazin- | 2-(4′-Amino-3′-sulfophenylamino)-4-fluor-6-(2″-sulfophenylamino)-1,3,5-triazin | grünstichig blau |
| 276 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(2″-sulfophenylamino)-1,3,5-triazin | grünstichig blau |
| 277 | 2-(4′-Amino-2′,5′-disulfophenylamino)-4-fluor-6-(2″-chlor-5″-sulfophenylamino)-1,3,5-triazin | 2-(4′-Amino-3′-sulfophenylamino)-4-fluor-6-(2″-sulfophenylamino)-1,3,5-triazin | grünstichig blau |
| 278 | 2-(4′-Amino-2′,5′-disulfophenylamino)-4-fluor-6-(β-hydroxyäthylamino)-1,3,5-triazin | 2-(4′-Amino-3′-sulfophenylamino)-4-fluor-6-(2″-sulfophenylamino)-1,3,5-triazin | grünstichig blau |
| 279 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(2″-sulfophenylamino)-1,3,5-triazin | grünstichig blau |
| 280 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 281 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(1″-sulfonaphth-2″-yl-amino)-1,3,5-triazin | grünstichig blau |
| 282 | 2-(3′-Amino-4′-sulfophenylamino)-4-fluor-6-(2″-chlor-5″-sulfophenylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 283 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 284 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 285 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(1″-sulfonaphth-2″-yl-amino)-1,3,5-triazin | grünstichig blau |

Tabelle 1 (Fortsetzung)

| Nr. | Diazokomponente | Diazokomponente | Farbton auf Baumwolle |
|---|---|---|---|
| 286 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(1″-sulfonaphth-2″-yl-amino)-1,3,5-triazin | grünstichig blau |
| 287 | 2-(4′-Amino-2′,5′-disulfophenylamino)-4-fluor-6-(2″-chlor-5″-sulfophenylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 288 | 2-(4′-Amino-2′,5′-disulfophenylamino)-4-fluor-6-(β-hydroxyäthylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 289 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(1″-sulfonaphth-2″-yl-amino)-1,3,5-triazin | grünstichig blau |
| 290 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(2″-chlor-5″-sulfophenylamino)-1,3,5-triazin | grünstichig blau |
| 291 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(2″-chlor-5″-sulfophenylamino)-1,3,5-triazin | grünstichig blau |
| 292 | 2-(3′-Amino-4′-sulfophenylamino)-4-fluor-6-(2″-chlor-5″-sulfophenylamino)-1,3,5-triazin | 2-(4′-Amino-3′-sulfophenylamino)-4-fluor-6-(2″-chlor-5″-sulfophenylamino)-1,3,5-triazin | grünstichig blau |
| 293 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(2″-chlor-5″-sulfophenylamino)-1,3,5-triazin | grünstichig blau |
| 294 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(2″-chlor-5″-sulfophenylamino)-1,3,5-triazin | grünstichig blau |
| 295 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(2″-chlor-5″-sulfophenylamino)-1,3,5-triazin | grünstichig blau |
| 296 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(2″-chlor-5″-sulfophenylamino)-1,3,5-triazin | grünstichig blau |
| 297 | 2-(4′-Amino-2′,5′-disulfophenylamino)-4-fluor-6-(2″-chlor-5″-sulfophenylamino)-1,3,5-triazin | 2-(4′-Amino-3′-sulfophenylamino)-4-fluor-6-(2″-chlor-5″-sulfophenylamino)-1,3,5-triazin | grünstichig blau |
| 298 | 2-(4′-Amino-2′,5′-disulfophenylamino)-4-fluor-6-(β-hydroxyäthylamino)-1,3,5-triazin | 2-(4′-Amino-3′-sulfophenylamino)-4-fluor-6-(2″-chlor-5″-sulfophenylamino)-1,3,5-triazin | grünstichig blau |
| 299 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(2″-chlor-5″-sulfophenylamino)-1,3,5-triazin | grünstichig blau |
| 300 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(β-hydroxyäthylamino)-1,3,5-triazin | grünstichig blau |
| 301 | 2-(3′-Amino-4′-sulfophenylamino)-4-fluor-6-(1″-sulfonaphth-2″-yl-amino)-1,3,5-triazin | 2-(4′-Amino-3′-sulfophenylamino)-4-fluor-6-(β-hydroxyäthylamino)-1,3,5-triazin | grünstichig blau |
| 302 | 2-(3′-Amino-4′-sulfophenylamino)-4-fluor-6-(2″-chlor-5″-sulfophenylamino)-1,3,5-triazin | 2-(4′-Amino-3′-sulfophenylamino)-4-fluor-6-(β-hydroxyäthylamino)-1,3,5-triazin | grünstichig blau |
| 303 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(β-hydroxyäthylamino)-1,3,5-triazin | grünstichig blau |
| 304 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(β-hydroxyäthylamino)-1,3,5-triazin | grünstichig blau |
| 305 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(β-hydroxyäthylamino)-1,3,5-triazin | grünstichig blau |
| 306 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(β-hydroxyäthylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 307 | 2-(4′-Amino-2′,5′-disulfophenylamino)-4-fluor-6-(2″-chlor-5″-sulfophenylamino)-1,3,5-triazin | 2-(4′-Amino-3′-sulfophenylamino)-4-fluor-6-(β-hydroxyäthylamino)-1,3,5-triazin | grünstichig blau |
| 308 | 2-(4′-Amino-2′,5′-disulfophenylamino)-4-fluor-6-(β-hydroxyäthylamino)-1,3,5-triazin | 2-(4′-Amino-3′-sulfophenylamino)-4-fluor-6-(β-hydroxyäthylamino)-1,3,5-triazin | grünstichig blau |
| 309 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(β-hydroxyäthylamino)-1,3,5-triazin | grünstichig blau |
| 310 | 2-(3′-Amino-4′-sulfophenylamino)-4-fluor-6-(2″-sulfophenylamino)-1,3,5-triazin | 2-(4′-Amino-3′-sulfophenylamino)-4-fluor-6-(β-sulfoäthylamino)-1,3,5-triazin | grünstichig blau |
| 311 | 2-(3′-Amino-4′-sulfophenylamino)-4-fluor-6-(1″sulfonaphth-2″-yl-amino)-1,3,5-triazin | 2-(4′-Amino-3′-sulfophenylamino)-4-fluor-6-(β-sulfoäthylamino)-1,3,5-triazin | grünstichig blau |
| 312 | 2-(3′-Amino-4′-sulfophenylamino)-4-fluor-6-(2″-chlor-5″-sulfophenylamino)-1,3,5-triazin1,3,5-triazin | 2-(4′-Amino-3′-sulfophenylamino)-4-fluor-6-(β-sulfoäthylamino)-1,3,5-triazin | grünstichig blau |
| 313 | 2-(3′-Amino-4′-sulfophenylamino)-4-fluor-6-(β-hydroxyäthylamino)-1,3,5-triazin | 2-(4′-Amino-3′-sulfophenylamino)-4-fluor-6-(β-sulfoäthylamino)-1,3,5-triazin | grünstichig blau |
| 314 | 2-(3′-Amino-4′-sulfophenylamino)-4-fluor-6-(β-sulfoäthylamino)-1,3,5-triazin | 2-(4′-Amino-3′-sulfophenylamino)-4-fluor-6-(β-sulfoäthylamino)-1,3,5-triazin | grünstichig blau |
| 315 | 2-(4′-Amino-2′,5′-disulfophenylamino)-4-fluor-6-(2″-sulfophenylamino)-1,3,5-triazin | 2-(4′-Amino-3′-sulfophenylamino)-4-fluor-6-(β-sulfoäthylamino)-1,3,5-triazin | grünstichig blau |
| 316 | 2-(4′-Amino-2′,5′-disulfophenylamino)-4-fluor-6-(1″-sulfonaphth-2″-yl-amino)-1,3,5-triazin | 2-(4′-Amino-3′-sulfophenylamino)-4-fluor-6-(β-sulfoäthylamino)-1,3,5-triazin | grünstichig blau |
| 317 | 2-(4′-Amino-2′,5′-disulfophenylamino)-4-fluor-6-(2″-chlor-5″-sulfophenylamino)-1,3,5-triazin | 2-(4′-Amino-3′-sulfophenylamino)-4-fluor-6-(β-sulfoäthylamino)-1,3,5-triazin | grünstichig blau |
| 318 | 2-(4′-Amino-2′,5′-disulfophenylamino)-4-fluor-6-(β-hydroxyäthylamino)-1,3,5-triazin | 2-(4′-Amino-3′-sulfophenylamino)-4-fluor-6-(β-sulfoäthylamino)-1,3,5-triazin | grünstichig blau |
| 319 | 2-(4′-Amino-2′,5′-disulfophenylamino)-4-fluor-6-(β-sulfoäthylamino)-1,3,5-triazin | 2-(4′-Amino-3′-sulfophenylamino)-4-fluor-6-(β-sulfoäthylamino)-1,3,5-triazin | grünstichig blau |
| 320 | 2-(3′-Amino-4′-sulfophenylamino)-4-fluor-6-(2″-sulfophenylamino)-1,3,5-triazin | 2-(4′-Amino-2′,5′-disulfophenylamino)-4-fluor-6-(2″-sulfophenylamino)-1,3,5-triazin | grünstichig blau |
| 321 | 2-(3′-Amino-4′-sulfophenylamino)-4-fluor-6-(1″-sulfonaphth-2″-yl-amino)-1,3,5-triazin | 2-(4′-Amino-2′,5′-disulfophenylamino)-4-fluor-6-(2″-sulfophenylamino)-1,3,5-triazin | grünstichig blau |
| 322 | 2-(3′-Amino-4′-sulfophenylamino)-4-fluor-6-(2″-chlor-5″-sulfophenylamino)-1,3,5-triazin | 2-(4′-Amino-2′,5′-disulfophenylamino)-4-fluor-6-(2″-sulfophenylamino)-1,3,5-triazin | grünstichig blau |
| 323 | 2-(3′-Amino-4′-sulfophenylamino)-4-fluor-6-(β-hydroxyäthylamino)-1,3,5-triazin | 2-(4′-Amino-2′,5′-disulfophenylamino)-4-fluor-6-(2″-sulfophenylamino)-1,3,5-triazin | grünstichig blau |
| 324 | 2-(3′-Amino-4′-sulfophenylamino)-4-fluor-6-(β-sulfoäthylamino)-1,3,5-triazin | 2-(4′-Amino-2′,5′-disulfophenylamino)-4-fluor-6-(2″-sulfophenylamino)-1,3,5-triazin | grünstichig blau |
| 325 | 2-(4′-Amino-3′-sulfophenylamino)-4-fluor-6-(2″-sulfophenylamino)-1,3,5-triazin | 2-(4′-Amino-2′,5′-disulfophenylamino)-4-fluor-6-(2″-sulfophenylamino)-1,3,5-triazin | grünstichig blau |
| 326 | 2-(4′-Amino-3′-sulfophenylamino)-4-fluor-6-(1″-sulfonaphth-2″-yl-amino)-1,3,5-triazin | 2-(4′-Amino-2′,5′-disulfophenylamino)-4-fluor-6-(2″-sulfophenylamino)-1,3,5-triazin | grünstichig blau |
| 327 | 2-(4′-Amino-3′-sulfophenylamino)-4-fluor-6-(2″-chlor-5″-sulfophenylamino)-1,3,5-triazin | 2-(4′-Amino-2′,5′-disulfophenylamino)-4-fluor-6-(2″-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 328 | 2-(4'-Amino-3'-sulfophenylamino)-4-fluor-6-(β-hydroxyäthylamino)-1,3,5-triazin | 2-(4'-Amino-2',5'-disulfophenylamino)-4-fluor-6-(2''-sulfophenylamino)-1,3,5-triazin | grünstichig blau |
| 329 | 2-(4'-Amino-3'-sulfophenylamino)-4-fluor-6-(β-sulfoäthylamino)-1,3,5-triazin | 2-(4'-Amino-2',5'-disulfophenylamino)-4-fluor-6-(2''-sulfophenylamino)-1,3,5-triazin | grünstichig blau |
| 330 | 2-(4'-Amino-2',5'-disulfophenylamino)-4-fluor-6-(1''-sulfonaphth-2''-yl-amino)-1,3,5-triazin | 2-(4'-Amino-2',5'-disulfophenylamino)-4-fluor-6-(2''-sulfophenylamino)-1,3,5-triazin | grünstichig blau |
| 331 | 2-(4'-Amino-2',5'-disulfophenylamino)-4-fluor-6-(2''-chlor-5''-sulfophenylamino)-1,3,5-triazin | 2-(4'-Amino-2',5'-disulfophenylamino)-4-fluor-6-(2''-sulfophenylamino)-1,3,5-triazin | grünstichig blau |
| 332 | 2-(4'-Amino-2',5'-disulfophenylamino)-4-fluor-6-(β-hydroxyäthylamino)-1,3,5-triazin | 2-(4'-Amino-2',5'-disulfophenylamino)-4-fluor-6-(2''-sulfophenylamino)-1,3,5-triazin | grünstichig blau |
| 333 | 2-(4'-Amino-2',5'-disulfophenylamino)-4-fluor-6-(β-sulfoäthylamino)-1,3,5-triazin | 2-(4'-Amino-2',5'-disulfophenylamino)-4-fluor-6-(2''-sulfophenylamino)-1,3,5-triazin | grünstichig blau |
| 334 | 2-(3'-Amino-4'-sulfophenylamino)-4-fluor-6-(2''-sulfophenylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 335 | 2-(3'-Amino-4'-sulfophenylamino)-4-fluor-6-(1''-sulfonaphth-2''-yl-amino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 336 | 2-(3'-Amino-4'-sulfophenylamino)-4-fluor-6-(2''-chlor-5''-sulfophenylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 337 | 2-(3'-Amino-4'-sulfophenylamino)-4-fluor-6-(β-hydroxyäthylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 338 | 2-(3'-Amino-4'-sulfophenylamino)-4-fluor-6-(β-sulfoäthylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 339 | 2-(4'-Amino-3'-sulfophenylamino)-4-fluor-6-(2''-sulfophenylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 340 | 2-(4'-Amino-3'-sulfophenylamino)-4-fluor-6-(1''-sulfonaphth-2''-yl-amino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 341 | 2-(4'-Amino-3'-sulfophenylamino)-4-fluor-6-(2''-chlor-5''-sulfophenylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 342 | 2-(4'-Amino-3'-sulfophenylamino)-4-fluor-6-(β-hydroxyäthylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 343 | 2-(4'-Amino-3'-sulfophenylamino)-4-fluor-6-(β-sulfoäthylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 344 | 2-(4'-Amino-2',5'-disulfophenylamino)-4-fluor-6-(2''-sulfophenylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 345 | 2-(4'-Amino-2',5'-disulfophenylamino)-4-fluor-6-(2''-chlor-5''-sulfophenylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 346 | 2-(4'-Amino-2',5'-disulfophenylamino)-4-fluor-6-(β-hydroxyäthylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 347 | 2-(4'-Amino-2',5'-disulfophenylamino)-4-fluor-6-(β-sulfoäthylamino)-1,3,5-triazin | 2-(4'-Amino-2',5'-disulfophenylamino)-4-fluor-6-(1''-sulfonaphth-2''-yl-amino)-1,3,5-triazin | grünstichig blau |
| 348 | 2-(3'-Amino-4'-sulfophenylamino)-4-fluor-6-(2''-sulfophenylamino)-1,3,5-triazin | 2-(4'-Amino-2',5'-disulfophenylamino)-4-fluor-6-(2''-chlor-5''-sulfophenylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 349 | 2-(3'-Amino-4'-sulfophenylamino)-4-fluor-6-(1''-sulfonaphth-2''-yl-amino)-1,3,5-triazin | 2-(4'-Amino-2',5'-disulfophenylamino)-4-fluor-6-(2''-chlor-5''-sulfophenylamino)-1,3,5-triazin | grünstichig blau |
| 350 | 2-(3'-Amino-4'-sulfophenylamino)-4-fluor-6-(2''-chlor-5''-sulfophenylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 351 | 2-(3'-Amino-4'-sulfophenylamino)-4-fluor-6-(β-hydroxyäthylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 352 | 2-(3'-Amino-4'-sulfophenylamino)-4-fluor-6-(β-sulfoäthylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 353 | 2-(4'-Amino-3'-sulfophenylamino)-4-fluor-6-(2''-sulfophenylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 354 | 2-(4'-Amino-3'-sulfophenylamino)-4-fluor-6-(1''-sulfonaphth-2''-yl-amino)-1,3,5-triazin | 2-(4'-Amino-2',5'-disulfophenylamino)-4-fluor-6-(2''-chlor-5''-sulfophenylamino)-1,3,5-triazin | grünstichig blau |
| 355 | 2-(4'-Amino-3'-sulfophenylamino)-4-fluor-6-(2''-chlor-5''-sulfophenylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 356 | 2-(4'-Amino-3'-sulfophenylamino)-4-fluor-6-(β-hydroxyäthylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 357 | 2-(4'-Amino-3'-sulfophenylamino)-4-fluor-6-(β-sulfoäthylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 358 | 2-(4'-Amino-2',5'-disulfophenylamino)-4-fluor-6-(2''-sulfophenylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 359 | 2-(4'-Amino-2',5'-disulfophenylamino)-4-fluor-6-(1''-sulfonaphth-2''-yl-amino)-1,3,5-triazin | 2-(4'-Amino-2',5'-disulfophenylamino)-4-fluor-6-(2''-chlor-5''-sulfophenylamino)-1,3,5-triazin | grünstichig blau |
| 360 | 2-(4'-Amino-2',5'-disulfophenylamino)-4-fluor-6-(β-hydroxyäthylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 361 | 2-(4'-Amino-2',5'-disulfophenylamino)-4-fluor-6-(β-sulfoäthylamino)-1,3,5-triazin | 2-(4'-Amino-2',5'-disulfophenylamino)-4-fluor-6-(2''-chlor-5''-sulfophenylamino)-1,3,5-triazin | grünstichig blau |
| 362 | 2-(3'-Amino-4'-sulfophenylamino)-4-fluor-6-(2''-sulfophenylamino)-1,3,5-triazin | 2-(4'-Amino-2',5'-disulfophenylamino)-4-fluor-6-(β-hydroxyäthylamino)-1,3,5-triazin | grünstichig blau |
| 363 | 2-(3'-Amino-4'-sulfophenylamino)-4-fluor-6-(1''-sulfonaphth-2''-yl-amino)-1,3,5-triazin | 2-(4'-Amino-2',5'-disulfophenylamino)-4-fluor-6-(β-hydroxyäthylamino)-1,3,5-triazin | grünstichig blau |
| 364 | 2-(3'-Amino-4'-sulfophenylamino)-4-fluor-6-(2''-chlor-5''-sulfophenylamino)-1,3,5-triazin | 2-(4'-Amino-2',5'-disulfophenylamino)-4-fluor-6-(β-hydroxyäthylamino)-1,3,5-triazin | grünstichig blau |
| 365 | 2-(3'-Amino-4'-sulfophenylamino)-4-fluor-6-(β-hydroxyäthylamino)-1,3,5-triazin | 2-(4'-Amino-2',5'-disulfophenylamino)-4-fluor-6-(β-hydroxyäthylamino)-1,3,5-triazin | grünstichig blau |
| 366 | 2-(3'-Amino-4'-sulfophenylamino)-4-fluor-6-(β-sulfoäthylamino)-1,3,5-triazin | 2-(4'-Amino-2',5'-disulfophenylamino)-4-fluor-6-(β-hydroxyäthylamino)-1,3,5-triazin | grünstichig blau |
| 367 | 2-(4'-Amino-3'-sulfophenylamino)-4-fluor-6-(2''-sulfophenylamino)-1,3,5-triazin | 2-(4'-Amino-2',5'-disulfophenylamino)-4-fluor-6-(β-hydroxyäthylamino)-1,3,5-triazin | grünstichig blau |
| 368 | 2-(4'-Amino-3'-sulfophenylamino)-4-fluor-6-(1''-sulfonaphth-2''-yl-amino)-1,3,5-triazin | 2-(4'-Amino-2',5'-disulfophenylamino)-4-fluor-6-(β-hydroxyäthylamino)-1,3,5-triazin | grünstichig blau |
| 369 | 2-(4'-Amino-3'-sulfophenylamino)-4-fluor-6-(2''-chlor-5''-sulfophenylamino)-1,3,5-triazin | 2-(4'-Amino-2',5'-disulfophenylamino)-4-fluor-6-(β-hydroxyäthylamino)-1,3,5-triazin | grünstichig blau |

Tabelle 1 (Fortsetzung)

| Nr. | Diazokomponente | Diazokomponente | Farbton auf Baumwolle |
|---|---|---|---|
| 370 | 2-(4′-Amino-3′-sulfophenylamino)-4-fluor-6-(β-hydroxyäthylamino)-1,3,5-triazin | 2-(4′-Amino-2′,5′-disulfophenylamino)-4-fluor-6-(β-hydroxyäthylamino)-1,3,5-triazin | grünstichig blau |
| 371 | 2-(4′-Amino-3′-sulfophenylamino)-4-fluor-6-(β-sulfoäthylamino)-1,3,5-triazin | 2-(4′-Amino-2′,5′-disulfophenylamino)-4-fluor-6-(β-hydroxyäthylamino)-1,3,5-triazin | grünstichig blau |
| 372 | 2-(4′-Amino-2′,5′-disulfophenylamino)-4-fluor-6-(2″-sulfophenylamino)-1,3,5-triazin | 2-(4′-Amino-2′,5′-disulfophenylamino)-4-fluor-6-(β-hydroxyäthylamino)-1,3,5-triazin | grünstichig blau |
| 373 | 2-(4′-Amino-2′,5′-disulfophenylamino)-4-fluor-6-(1″-sulfonaphth-2″-yl-amino)-1,3,5-triazin | 2-(4′-Amino-2′,5′-disulfophenylamino)-4-fluor-6-(β-hydroxyäthylamino)-1,3,5-triazin | grünstichig blau |
| 374 | 2-(4′-Amino-2′,5′-disulfophenylamino)-4-fluor-6-(2″-chlor-5″-sulfophenylamino)-1,3,5-triazin | 2-(4′-Amino-2′,5′-disulfophenylamino)-4-fluor-6-(β-hydroxyäthylamino)-1,3,5-triazin | grünstichig blau |
| 375 | 2-(4′-Amino-2′,5′-disulfophenylamino)-4-fluor-6-(β-sulfoäthylamino)-1,3,5-triazin | 2-(4′-Amino-2′,5′-disulfophenylamino)-4-fluor-6-(β-hydroxyäthylamino)-1,3,5-triazin | grünstichig blau |
| 376 | 2-(3′-Amino-4′-sulfophenylamino)-4-fluor-6-(2″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 377 | 2-(3′-Amino-4′-sulfophenylamino)-4-fluor-6-(1″-sulfonaphth-2″-yl-amino)-1,3,5-triazin | 2-(4′-Amino-2′,5′-disulfophenylamino)-4-fluor-6-(β-sulfoäthylamino)-1,3,5-triazin | grünstichig blau |
| 378 | 2-(3′-Amino-4′-sulfophenylamino)-4-fluor-6-(2″-chlor-5″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 379 | 2-(3′-Amino-4′-sulfophenylamino)-4-fluor-6-(β-hydroxyäthylamino)-1,3,5-triazin | 2-(4′-Amino-2′,5′-disulfophenylamino)-4-fluor-6-(β-sulfoäthylamino)-1,3,5-triazin | grünstichig blau |
| 380 | 2-(3′-Amino-4′-sulfophenylamino)-4-fluor-6-(β-sulfoäthylamino)-1,3,5-triazin | 2-(4′-Amino-2′,5′-disulfophenylamino)-4-fluor-6-(β-sulfoäthylamino)-1,3,5-triazin | grünstichig blau |
| 381 | 2-(4′-Amino-3′-sulfophenylamino)-4-fluor-6-(2″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 382 | 2-(4′-Amino-3′-sulfophenylamino)-4-fluor-6-(1″-sulfonaphth-2″-yl-amino)-1,3,5-triazin | 2-(4′-Amino-2′,5′-disulfophenylamino)-4-fluor-6-(β-sulfoäthylamino)-1,3,5-triazin | grünstichig blau |
| 383 | 2-(4′-Amino-3′-sulfophenylamino)-4-fluor-6-(2″-chlor-5″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 384 | 2-(4′-Amino-3′-sulfophenylamino)-4-fluor-6-(β-hydroxyäthylamino)-1,3,5-triazin | 2-(4′-Amino-2′,5′-disulfophenylamino)-4-fluor-6-(β-sulfoäthylamino)-1,3,5-triazin | grünstichig blau |
| 385 | 2-(4′-Amino-3′-sulfophenylamino)-4-fluor-6-(β-sulfoäthylamino)-1,3,5-triazin | 2-(4′-Amino-2′,5′-disulfophenylamino)-4-fluor-6-(β-sulfoäthylamino)-1,3,5-triazin | grünstichig blau |
| 386 | 2-(4′-Amino-2′,5′-disulfophenylamino)-4-fluor-6-(2″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 387 | 2-(4′-Amino-2′,5′-disulfophenylamino)-4-fluor-6-(1″-sulfonaphth-2″-yl-amino)-1,3,5-triazin | 2-(4′-Amino-2′,5′-disulfophenylamino)-4-fluor-6-(β-sulfoäthylamino)-1,3,5-triazin | grünstichig blau |
| 388 | 2-(4′-Amino-2′,5′-disulfophenylamino)-4-fluor-6-(2″-chlor-5″-sulfophenylamino)-1,3,5-triazin | 2-(4′-Amino-2′,5′-disulfophenylamino)-4-fluor-6-(β-sulfoäthylamino)-1,3,5-triazin | grünstichig blau |
| 389 | 2-(4′-Amino-2′,5′-disulfophenylamino)-4-fluor-6-(β-hydroxyäthylamino)-1,3,5-triazin | 2-(4′-Amino-2′,5′-disulfophenylamino)-4-fluor-6-(β-sulfoäthylamino)-1,3,5-triazin | grünstichig blau |
| 390 | 2-(3′-Amino-4′,6′-disulfophenylamino)-4-fluor-6-(β-hydroxyäthylamino)-1,3,5-triazin | 2-(3′-Amino-4′-sulfophenylamino)-4-fluor-6-(2″-sulfophenylamino)-1,3,5-triazin | blau |

Tabelle 1 (Fortsetzung)

| Nr. | Diazokomponente | Diazokomponente | Farbton auf Baumwolle |
|---|---|---|---|
| 391 | 2-(3'-Amino-4',6'-disulfophenylamino)-4-fluor-6-(β-hydroxyäthylamino)-1,3,5-triazin | 2-(4'-Amino-3'-sulfophenylamino)-4-fluor-6-(2''-sulfophenylamino)-1,3,5-triazin | grünstichig blau |
| 392 | 2-(3'-Amino-4',6'-disulfophenylamino)-4-fluor-6-(N-methyl-N-phenyl-amino)-1,3,5-triazin | 2-(3'-Amino-4'-sulfophenylamino)-4-fluor-6-amino-1,3,5-triazin | blau |
| 393 | 2-(3'-Amino-4',6'-disulfophenylamino)-4-fluor-6-(N-methyl-N-phenyl-amino)-1,3,5-triazin | 2-(4'-Amino-3'-sulfophenylamino)-4-fluor-6-amino-1,3,5-triazin | grünstichig blau |
| 394 | 2-(3'-Amino-4',6'-disulfophenylamino)-4-fluor-6-(N-äthyl-N-phenyl-amino)-1,3,5-triazin | 2-(3'-Amino-4'-sulfophenylamino)-4-fluor-6-amino-1,3,5-triazin | blau |
| 395 | 2-(3'-Amino-4',6'-disulfophenylamino)-4-fluor-6-(N-äthyl-N-phenyl-amino)-1,3,5-triazin | 2-(4'-Amino-3'-sulfophenylamino)-4-fluor-6-amino-1,3,5-triazin | grünstichig blau |
| 396 | 2-(3'-Amino-4',6'-disulfophenylamino)-4-fluor-6-(β-hydroxy-äthylamino)-1,3,5-triazin | 2-(3'-Amino-4'-sulfophenylamino)-4-fluor-6-amino-1,3,5-triazin | blau |
| 397 | 2-(3'-Amino-4',6'-disulfophenylamino)-4-fluor-5-(β-hydroxyäthylamino)-1,3,5-triazin | 2-(4'-Amino-3'-sulfophenylamino)-4-fluor-6-amino-1,3,5-triazin | grünstichig blau |
| 398 | 2-(3'-Amino-4',6'-disulfophenylamino)-4-fluor-6-(N-methyl-N-phenylamino)-1,3,5-triazin | 2-(3'-Amino-4'-sulfophenylamino)-4-fluor-6-(2''-sulfophenylamino)-1,3,5-triazin | blau |
| 399 | 2-(3'-Amino-4',6'-disulfophenylamino)-4-fluor-6-(N-methyl-N-phenylamino)-1,3,5-triazin | 2-(4'-Amino-3'-sulfophenylamino)-4-fluor-6-(2''-sulfophenylamino)-1,3,5-triazin | grünstichig blau |
| 400 | 2-(3'-Amino-4',6'-disulfophenylamino)-4-fluor-6-(N-äthyl-N-phenyl-amino)-1,3,5-triazin | 2-(3'-Amino-4'-sulfophenylamino)-4-fluor-6-(2''-sulfophenylamino)-1,3,5-triazin | blau |
| 401 | 2-(3'-Amino-4',6'-disulfophenylamino)-4-fluor-6-(N-äthyl-N-phenyl-amino)-1,3,5-triazin | 2-(4'-Amino-3'-sulfophenylamino)-4-fluor-6-(2''-sulfophenylamino)-1,3,5-triazin | grünstichig blau |
| 402 | 2-(3'-Amino-4',6'-disulfophenylamino)-4-fluor-6-(N,N-dimethylamino)-1,3,5-triazin | 2-(3'-Amino-4',6'-disulfophenylamino)-4-fluor-6-(N,N-dimethylamino)-1,3,5-triazin | blau |
| 403 | 2-(3'-Amino-4',6'-disulfophenylamino)-4-fluor-6-(N,N-diäthylamino)-1,3,5-triazin | 2-(3'-Amino-4',6'-disulfophenylamino)-4-fluor-6-(N,N-diäthylamino)-1,3,5-triazin | blau |
| 404 | 2-(3'-Amino-4',6'-disulfophenylamino)-4-fluor-6-(N,N-dimethylamino)-1,3,5-triazin | 2-(3'-Amino-4',6'-disulfophenylamino)-4-fluor-6-(N,N-diäthylamino)-1,3,5-triazin | blau |
| 405 | 2-(3'-Amino-4',6'-disulfophenylamino)-4-fluor-6-(N,N-diäthylamino)-1,3,5-triazin | 2-(3'-Amino-4',6'-disulfophenylamino)-4-fluor-6-(N,N-dimethylamino)-1,3,5-triazin | blau |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

Färbevorschrift III

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift IV

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,1 Liter Wasserglas (38° Bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20 °C warmen Lösung, die pro Liter 4 Gramm Natriumhydroxyd und 300 Gramm Natriumchlorid enthält, quetscht auf 75% Gewichtszunahme ab, dämpft die Färbung während 30 bis 60 Sekunden bei 100 bis 102 °C, spült, seift während einer Viertelstunde in einer 0,3%-igen kochenden Lösung eines nichtionogenen Waschmittels, spült und trocknet.

Färbevorschrift VI

4 Teile des gemäss Beispiel 1 erhaltenen Reaktivfarbstoffes werden unter Zusatz von 1 Teil m-nitrobenzolsulfonsaurem Natrium in 50 Teilen Wasser gelöst. Dazu gibt man 50 Teile einer Lösung die pro Liter 120 g Natriumchlorid, 40 g kalziniertes Soda und 100 g Harnstoff enthält. Mit der erhaltenen Lösung wird ein Baumwollgewebe foulardiert, so dass es um 70% seines Gewichtes zunimmt.

Das so erhaltene, feuchte Baumwollgewebe wird 90 Sekunden bei 102 °C in gesättigtem Dampf gedämpft. Danach wird die gefärbte Ware gespült, während einer Viertelstunde mit einem nichtionogenen Waschmittel kochend geseift, nochmals gespült und getrocknet.

Färbevorschrift VII

6 Teile des gemäss Beispiel 1 erhaltenen Reaktivfarbstoffes werden unter Zusatz von 1 Teil m-nitrobenzolsulfonsaurem Natrium in 50 Teilen Wasser gelöst. Dazu gibt man 50 Teile einer Lösung, die pro Liter 20 g kalziniertes Soda und 400 g Harnstoff enthält. Mit der erhaltenen Lösung wird ein Baumwollgewebe foulardiert, so dass es um 70% seines Gewichtes zunimmt, und dann getrocknet. Das so erhaltene Baumwollgewebe wird 90 Sekunden bei 140 °C thermofixiert. Danach wird die gefärbte Ware gespült, während einer Viertelstunde mit einem nichtionogenen Waschmittel kochend geseift, nochmals gespült und getrocknet.

Färbevorschrift VIII

4 Teile des gemäss Beispiel 1 erhaltenen Reaktivfarbstoffes werden unter Zusatz von 1 Teil m-nitrobenzolsulfonsaurem Natrium in 50 Teilen Wasser gelöst. Dazu gibt man 50 Teile einer Lösung, die pro Liter 11,2 g Natriumhydroxyd, 0,04 Liter Wasserglas (38° Bé) und 100 g Harnstoff enthält. Mit der erhaltenen Lösung wird ein Baumwollgewebe imprägniert, so dass es um 70% seines Gewichts zunimmt, und dann getrocknet.

Das so erhaltene Baumwollgewebe wird 30 bis 60 Sekunden bei 102 °C in gesättigtem Dampf gedämpft. Danach wird die gefärbte Ware gespült, während einer Viertelstunde mit einem nichtionogenen Waschmittel kochend geseift, nochmals gespült und getrocknet.

Druckschrift

3 Teile des gemäss Beispiel 1 erhaltenen Reaktivfarbstoffes werden unter schnellem Rühren in 100 Teile einer Stammverdickung, enthaltend 50 Teile 5%-ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 bis 8 Minuten bei 102 °C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

$$X_1\text{–NH–A–N}=\text{N–M–N}=\text{N–B–NH–}X_2 \qquad (1)$$

worin M zweifach gekuppelte
1-Amino-8-hydroxynaphthalin-3,6-disulfonsäure,
1-Amino-8-hydroxynaphthalin-4,6-disulfonsäure,
1-Amino-8-hydroxynaphthalin-4-sulfonsäure oder
2-Amino-5-hydroxynaphthalin-7-sulfonsäure,
A und B unabhängig voneinander unsubstituiertes oder substituiertes Phenylen oder Naphthylen, und $X_1$ und $X_2$ unabhängig voneinander unsubsti-

tuiertes oder substituiertes Amino-fluor-1,3,5-triazinyl ist, wobei eine substituierte Aminogruppe am Triazinring keinen weiteren Reaktivrest enthält; ausgenommen Reaktivfarbstoffe der Formel (1), worin A und B in para-Stellung verknüpfte Monosulfophenylen-Reste sind, in denen die Sulfogruppe in ortho-Stellung zur Azobrücke steht.

2. Reaktivfarbstoffe gemäss Anspruch 1, der Formel

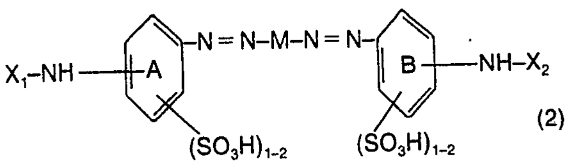

(2)

worin M, $X_1$ und $X_2$ die in Anspruch 1 angegebenen Bedeutungen haben, und die Benzolringe A und B unabhängig voneinander gegebenenfalls weitersubstituiert sind.

3. Reaktivfarbstoffe gemäss Anspruch 2, worin $X_1$ und $X_2$ unabhängig voneinander je ein Rest der Formel

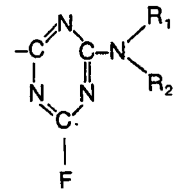

(3)

ist, worin $R_1$ und $R_2$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenäthyl, Cyclohexyl, Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist, oder worin $R_1$ und $R_2$ zusammen mit dem Aminostickstoffatom einen Morpholino-, Piperidino- oder Piperazinorest bilden.

4. Reaktivfarbstoffe gemäss Anspruch 3, worin die Benzolringe A und B nicht weitersubstituiert sind.

5. Reaktivfarbstoffe gemäss Anspruch 4, der Formel

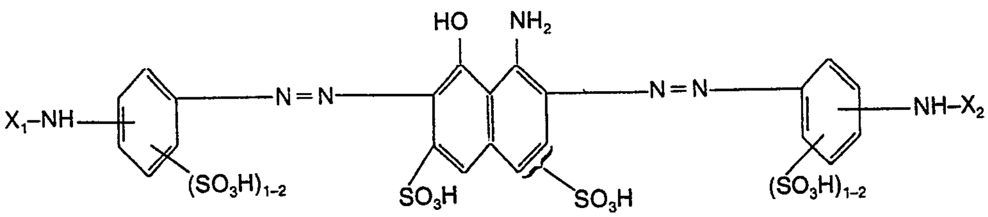

(4),

worin $X_1$ und $X_2$ die für Anspruch 4 geltenden Bedeutungen haben.

6. Reaktivfarbstoffe gemäss Anspruch 5, der Formel

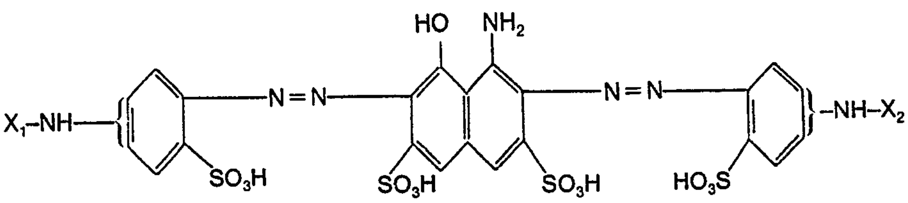

(5),

worin $X_1$ und $X_2$ die für Anspruch 5 geltenden Bedeutungen haben.

7. Reaktivfarbstoffe gemäss Anspruch 5, der Formel

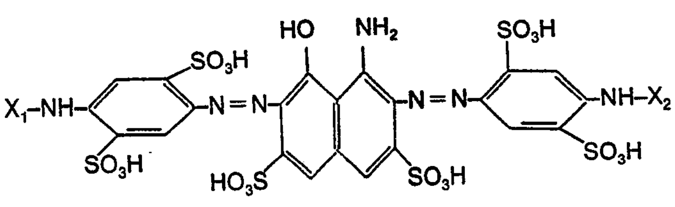

(6),

worin $X_1$ und $X_2$ die für Anspruch 5 geltenden Bedeutungen haben.

8. Reaktivfarbstoffe gemäss Anspruch 5, der Formel

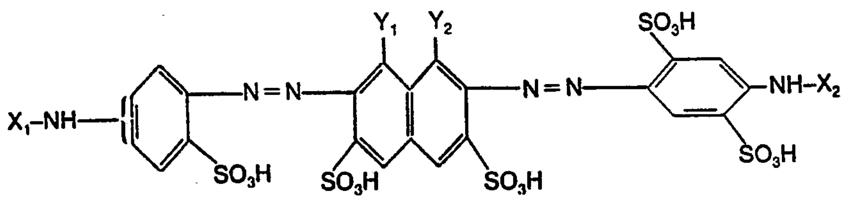

(7),

worin ein Y OH, und das andere Y $NH_2$ ist, und $X_1$ und $X_2$ die für Anspruch 5 geltenden Bedeutungen haben.

9. Reaktivfarbstoffe gemäss Anspruch 6, 7 oder 8, worin $X_1$ und $X_2$ unabhängig voneinander je ein Rest der Formel (3) ist, worin die Aminogruppe $-NR_1R_2$: $-NH_2$, N-β-Hydroxyäthylamino, N,N-Di-β-Hydroxyäthylamino, β-Sulfoäthylamino, Phenylamino, das gegebenenfalls im Phenylkern substituiert ist durch Chlor, Methyl, Äthyl, Methoxy, Äthoxy, Acetylamino, Hydroxy, Carboxy, Sulfomethyl oder Sulfo, N-$C_{1-4}$-Alkyl-N-phenylamino, das gegebenenfalls im Phenylkern substituiert ist durch Chlor, Methyl oder Äthyl, N-Sulfo-$C_{1-4}$-alkyl-N-phenylamino, das gegebenenfalls im Phenylkern substituiert ist durch Chlor, Methyl oder Äthyl, N-Hydroxy-$C_{1-4}$-alkyl-N-phenylamino, oder Sulfonaphthylamino ist.

10. Verfahren zur Herstellung von Reaktivfarbstoffen gemäss Anspruch 1, dadurch gekennzeichnet, dass man Diazokomponenten der Formeln

$$H_2N-A-Z_1 \quad (8)$$

und

$$H_2N-B-Z_2 \quad (9)$$

worin $Z_1$ und $Z_2$ unabhängig voneinander $NH_2$, Acetylamino oder Nitro ist, die Kupplungskomponente
1-Amino-8-hydroxynaphthalin-3,6-disulfonsäure,
1-Amino-8-hydroxynaphthalin-4,6-disulfonsäure,
1-Amino-8-hydroxynaphthalin-4-sulfonsäure oder
2-Amino-5-hydroxynaphthalin-7-sulfonsäure,
2 Äquivalente 2,4,6-Trifluor-1,3,5-triazin
und 2 Äquivalente von gleichen oder verschiedenen Aminen durch Diazotierung, Kupplung und Kondensation in geeigneter Reihenfolge zu Reaktivfarbstoffen der Formel (1) umsetzt, wobei falls $Z_1$ oder $Z_2$ Acetylamino oder Nitro ist, dieses vor der Kondensation mit dem Fluortriazin durch Verseifen der Acetylaminogruppe bzw. Reduzieren der Nitrogruppe in die $NH_2$ Gruppe übergeführt wird.

11. Verwendung der Reaktivfarbstoffe gemäss Anspruch 1, zum Färben oder Bedrucken von cellulosehaltigen Fasermaterialien.

12. Verwendung gemäss Anspruch 11, zum Färben oder Bedrucken von Baumwolle.

## Claims

1. A reactive dye of the formula

$$X_1-NH-A-N=N-M-N=N-B-NH-X_2 \quad (1)$$

in which M is twice-coupled 1-amino-8-hydroxynaphthalene-3,6-disulfonic acid, 1-amino-8-hydroxynaphthalene-4,6-disulfonic acid, 1-amino-8-hydroxynaphthalene-4-sulfonic acid or 2-amino-5-hydroxynaphthalene-7-sulfonic acid, A and B, independently of each other, are each unsubstituted or substituted phenylene or naphthylene, and $X_1$ and $X_2$, independently of each other, are each unsubstituted or substituted aminofluoro-1,3,5-triazinyl, in which a substituted amino group on the triazine does not contain any further reactive radicals, except reactive dyes of the formula (1) in which A and B are monosulfophenylene radicals linked in the para-position and in which the sulfo group is in the ortho-position relative to the azo bridge.

2. A reactive dye according to claim 1, of the formula in which M, $X_1$

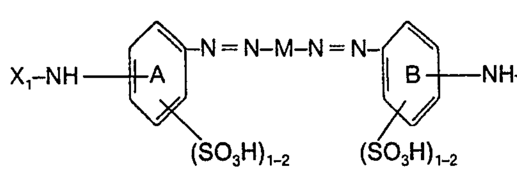

(2)

and $X_2$ are as defined in claim 1, and the benzene rings A and B can be further substituted independently of each other.

3. A reactive dye according to claim 2, in which $X_1$ and $X_2$, independently of each other, are each a radical of the formula

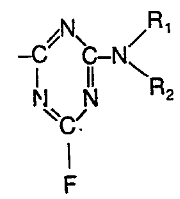

(3)

in which $R_1$ and $R_2$, independently of each other, are each hydrogen, $C_{1-4}$alkyl which is unsubstituted or substituted by halogen, cyano, $C_{1-4}$alkoxy, hydroxyl, carboxyl, sulfo or sulfato, benzyl, phenethyl, cyclohexyl, phenyl which is unsubstituted or substituted by halogen, nitro, cyano, trifluoromethyl, sulfamoyl, carbamoyl, $C_{1-4}$alkyl, $C_{1-4}$alkoxy, $C_{1-4}$alkanoylamino, benzoylamino, ureido, hydroxyl, carboxyl, sulfomethyl or sulfo, or naphthyl which is unsubstituted or substituted by halogen, nitro, $C_{1-4}$alkoxy, $C_{1-4}$alkanoylamino, hydroxyl, carboxyl or sulfo, or in which $R_1$ and $R_2$ are, together with the amino-nitrogen atom, a morpholino, piperidino or piperazino radical.

4. A reactive dye according to claim 3, in which the benzene rings A and B are not further substituted.

5. A reactive dye according to claim 4, of the formula in which $X_1$ and

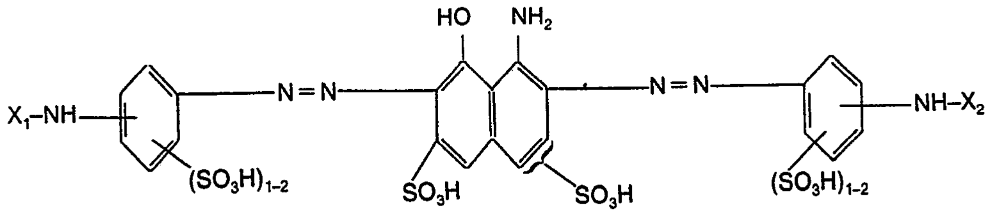 (4),

$X_2$ are as defined in claim 4.

6. A reactive dye according to claim 5, of the formula in which $X_1$ and

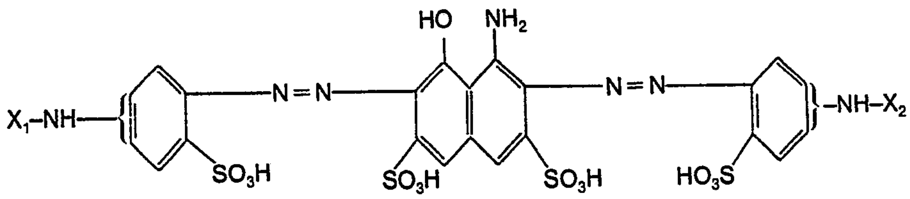 (5),

$X_2$ are as defined in claim 5.

7. A reactive dye according to claim 5, of the formula in which $X_1$ and

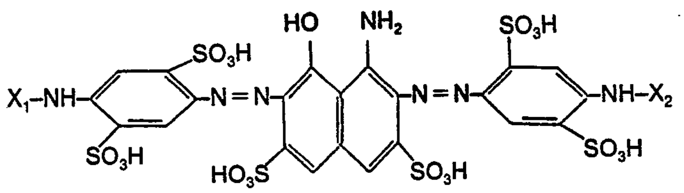 (6),

$X_2$ are as defined in claim 5.

8. A reactive dye according to claim 5, of the formula in which Y is OH,

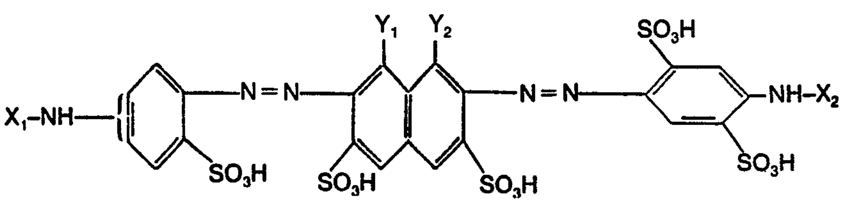 (7),

and the other Y is $NH_2$, and $X_1$ and $X_2$ are as defined for claim 5.

9. A reactive dye according to claim 6, 7 or 8, in which $X_1$ and $X_2$, independently of each other, are each a radical of the formula (3) in which the $-NR_1R_2$ amino group is $-NH_2$, N-β-hydroxethylamino, N,N-di-β-hydroxyethylamino, β-sulfoethylamino, phenylamino which is unsubstituted in the phenyl nucleus or is substituted there by chlorine, methyl, ethyl, methoxy, ethoxy, acetylamino, hydroxyl, carboxyl, sulfomethyl or sulfo, N-$C_{1-4}$alkyl-N-phenylamino which is unsubstituted in the phenyl nucleus or substituted there by chlorine, methyl or ethyl, N-sulfo-$C_{1-4}$alkyl-N-phenylamino which is unsubstituted in the phenyl nucleus or is substituted there by chlorine, methyl or ethyl, N-hydroxy-$C_{1-4}$alkyl-N-phenyl-amino, or sulfonaphthylamino.

10. A process for preparing a reactive dye according to claim 1, which comprises reacting diazo components of the formulae

$$H_2N-A-Z_1 \quad (8)$$

and

$$H_2N-B-Z_2 \quad (9)$$

in which $Z_1$ and $Z_2$, independently of each other, are each $NH_2$, acetylamino or nitro, the coupling component 1-amino-8-hydroxynaphthalene-3,6-disulfonic acid, 1-amino-8-hydroxynaphthalene-4,6-disulfonic acid, 1-amino-8-hydroxynaphthalene-4-sulfonic acid or 2-amino-5-hydroxynaphthalene-7-sulfonic acid, 2 equivalents of 2,4,6-trifluoro-1,3,5-triazine and 2 equivalents of identical or different amines by diazotization, coupling and condensation in suitable order to give

reactive dyes of the formula (1), provided that if $Z_1$ or $Z_2$ is acetylamino or nitro it is converted into the $NH_2$ group, by hydrolyzing the acetylamino group and reducing the nitro group, before the condensation with the fluorotriazine.

11. Use of a reactive dye according to claim 1, for dyeing or printing cellulose-containing fibre materials.

12. Use according to claim 11, for dyeing or printing cotton.

**Revendications**

1. Colorants réactifs de formule

$$X_1\text{–NH–A–N=N–M–N=N–B–NH–}X_2 \qquad (1)$$

dans laquelle M est
l'acide 1-amino-8-hydroxynaphtalène-3,6-disulfonique,
l'acide 1-amino-8-hydroxynaphtalène-4,6-disulfonique,
l'acide 1-amino-8-hydroxynaphtalène-4-sulfonique
ou l'acide 2-amino-5-hydroxynaphtalène-7-sulfonique
ayant subi une double copulation; A et B, indépendamment l'un de l'autre, représentent chacun le radical phénylène ou naphtylène éventuellement substitués, et $X_1$ et $X_2$, indépendamment l'un de l'autre, représentent chacun le radical amino-fluoro-1,3,5-triazinyle éventuellement substitué, un groupe amino substitué se trouvant sur le noyau triazine ne comportant aucun radical réactif supplémentaire; à l'exception des colorants réactifs de formule (1) où A et B sont des radicaux monosulfophénylène liés en position para, dans lesquels le groupe sulfo est en position ortho par rapport au pont azoïque.

2. Colorants réactifs selon la revendication 1, de formule

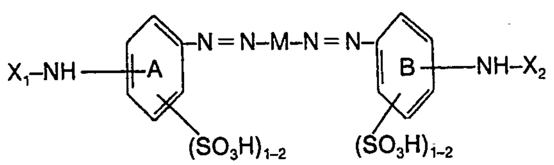
(2)

dans laquelle M, $X_1$ et $X_2$ ont les significations données dans la revendication 1, et les noyaux benzéniques A et B, indépendamment l'un de l'autre, portent éventuellement des substituants supplémentaires.

3. Colorants réactifs selon la revendication 2, dans lesquels $X_1$ et $X_2$, indépendamment l'un de l'autre, sont chacun un radical de formule

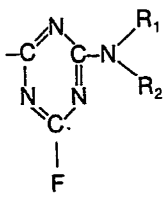
(3)

dans laquelle $R_1$ et $R_2$, indépendamment l'un de l'autre, sont chacun un hydrogène, un radical alkyle en $C_{1-4}$ éventuellement substitué par un radical halogéno, cyano, alcoxy ou $C_{1-4}$, hydroxy, carboxy, sulfo ou sulfato; le radical benzyle, phénéthyle, cyclohexyle, phényle éventuellement substitué par un radical halogéno, nitro, cyano, trifluorométhyle, sulfamoyle, carbamoyle, alkyle en $C_{1-4}$, alcoxy en $C_{1-4}$, (alcanoyle en $C_{1-4}$)amino, benzoylamino, uréido, hydroxy, carboxy, sulfométhyle ou sulfo; ou encore le radical naphtyle, éventuellement substitué par un radical halogéno, nitro, alcoxy en $C_{1-4}$, (alcanoyle en $C_{1-4}$)amino, hydroxy, carboxy ou sulfo; ou encore dans laquelle $R_1$ et $R_2$ forment, avec l'atome d'azote du radical amino, un radical morpholino, pipéridino ou pipérazino.

4. Colorants réactifs selon la revendication 3, dans lesquels les noyaux benzéniques A et B ne portent pas de substituants supplémentaires.

5. Colorants réactifs selon la revendication 4, de formule

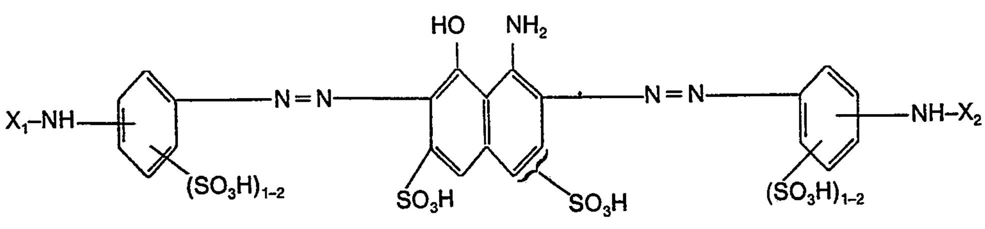
(4),

dans laquelle $X_1$ et $X_2$ ont les significations qui s'appliquent à la revendication 4.

6. Colorants réactifs selon la revendication 5, de formule

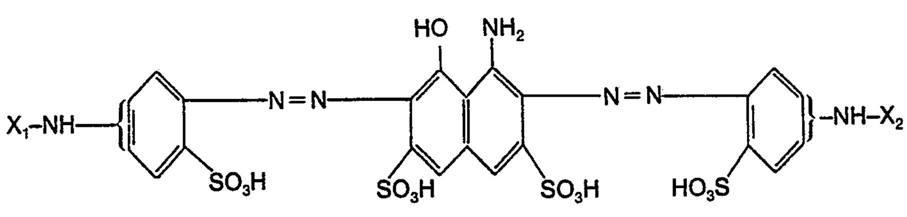
(5),

dans laquelle $X_1$ et $X_2$ ont les significations qui s'appliquent à la revendication 5.

7. Colorants réactifs selon la revendication 5, de formule

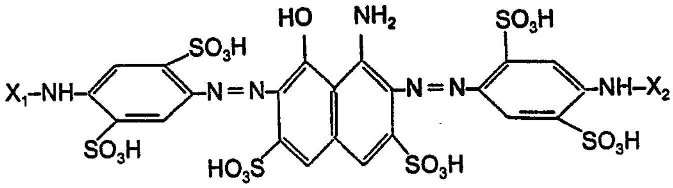

(6),

dans laquelle $X_1$ et $X_2$ ont les significations qui s'appliquent à la revendication 5.

8. Colorants réactifs selon la revendication 5, de formule

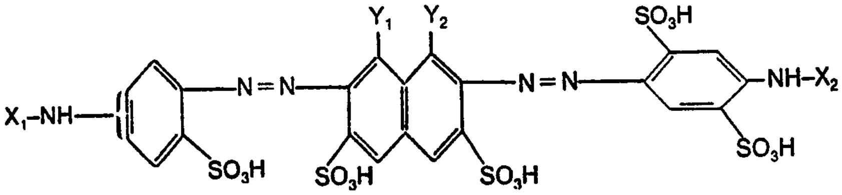

(7),

dans laquelle un radical Y est OH et l'autre est $NH_2$, et $X_1$ et $X_2$ ont les significations qui s'appliquent à la revendication 5.

9. Colorants réactifs selon les revendications 6, 7 ou 8, dans lesquels $X_1$ et $X_2$, indépendamment l'un de l'autre, sont chacun un radical de formule (3) dans laquelle le groupe amino $-NR_1R_2$ est le radical $-NH_2$, N-β-hydroxyéthylamino, N,N-di-β-hydroxyéthylamino, β-sulfoéthylamino, phénylamino éventuellement substitué dans le noyau phényle par le radical chloro, méthyle, éthyle, méthoxy, éthoxy, acétylamino, hydroxy, carboxy, sulfométhyle ou sulfo; un radical N-(alkyle en $C_{1-4}$)-N-phénylamino, éventuellement substitué dans le noyau phényle par le radical chloro, méthyle ou éthyle; un radical N-sulfo-(alkyle en $C_{1-4}$)-N-phénylamino, éventuellement substitué dans le noyau phényle par le radical chloro, méthyle ou éthyle; un radical N-hydroxy-(alkyle en $C_{1-4}$)-N-phénylamino, ou encore le radical sulfonaphtylamino.

10. Procédé pour la préparation de colorants réactifs selon la revendication 1, caractérisé en ce qu'on fait réagir des composants diazo de formules

$$H_2N-A-Z_1 \qquad (8)$$

et

$$H_2N-B-Z_2 \qquad (9)$$

dans lesquelles $Z_1$ et $Z_2$, indépendamment l'un de l'autre, sont chacun le radical $NH_2$, acétylamino ou nitro, le composant de copulation
acide 1-amino-8-hydroxynaphtalène-3,6-disulfonique,
acide 1-amino-8-hydroxynaphtalène-4,6-disulfonique,
acide 1-amino-8-hydroxynaphtalène-4-sulfonique
ou acide 2-amino-5-hydroxynaphtalène-7-sulfonique,
deux équivalents de 2,4,6-trifluoro-1,3,5-triazine et deux équivalents d'amines identiques ou différentes, par diazotation, copulation et condensation dans un ordre approprié, pour obtenir des colorants réactifs de formule (1) dans laquelle, si $Z_1$ ou $Z_2$ est le radical acétylamino ou nitro, on le convertit, avant condensation avec la fluorotriazine, en le groupe $NH_2$, respectivement par saponification du groupe acétylamino ou réduction du groupe nitro.

11. Utilisation des colorants réactifs selon la revendication 1 pour la teinture ou l'impression de matières fibreuses contenant de la cellulose.

12. Utilisation selon la revendication 11 pour la teinture ou l'impression du coton.